# EUROPEAN PATENT APPLICATION

(11) **EP 4 387 128 A1**
(43) Date of publication of application: **19.06.2024**
(21) Application number: 22863199.0
(22) Date of filing: 22.08.2022
(51) Int. Cl.: H04B 17/336

(54) **COMMUNICATION METHOD AND DEVICE**

(30) Priority: 28.08.2021 CN 202110999223; 03.12.2021 CN 202111471031
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Maiwald GmbH
(86) International application number: PCT/CN2022/113816
(87) International publication number: WO 2023/030060

(57) **Abstract**

This application provides a communication method and apparatus. The method includes: A first device receives a control channel and a first data channel, where the first device receives the control channel and the first data channel based on a same spatial domain receive parameter, or the first device receives both the control channel and the first data channel through an omnidirectional beam, and indication information of a spatial domain receive parameter of a second data channel is carried on the control channel and/or the first data channel. The first device receives the second data channel based on the indication information. In this application, the first device may first determine the spatial domain receive parameter of the second data channel based on the indication information of the spatial domain receive parameter of the second data channel in the control channel or the first data channel. Therefore, when the second data channel is being received, the determined spatial domain receive parameter may be used, thereby improving receiving performance of the data channel.

## Description

This application claims priority to Chinese Patent Application No. 202110999223.3, filed with the China National Intellectual Property Administration on August 28, 2021 and entitled "SIDELINK DATA TRANSMISSION METHOD", which is incorporated herein by reference in its entirety.

This application claims priority to Chinese Patent Application No. 202111471031.1, filed with the China National Intellectual Property Administration on December 3, 2021 and entitled "COMMUNICATION METHOD AND DEVICE", which is incorporated herein by reference in its entirety.

### TECHNICAL FIELD

This application relates to the communication field, and more specifically, to a communication method and device.

### BACKGROUND

A sidelink (Sidelink, SL) is a protocol designed for device-to-device (device-to-device, D2D) direct communication in the 3rd generation partnership project (3rd generation partnership project, 3GPP). A terminal device may directly communicate with another terminal device without forwarding via a network device. Deployment costs of the network device or a load of a deployed network device can be reduced. In addition, because a distance between the directly connected devices is usually short, a channel condition is good, and spectrum utilization efficiency of an entire system can be effectively improved.

A current sidelink frame structure is mainly designed for a frequency range 1 (frequency range 1, FR1). One sidelink data transmission usually includes a physical sidelink control channel (physical sidelink control channel, PSCCH), a physical sidelink shared channel (physical sidelink shared channel, PSSCH), and the like. The PSCCH includes sidelink control information 1 (Sidelink control information 1, SCI1), and the PSSCH includes sidelink control information 2 (Sidelink control information 2, SCI2) and data information. The SCI1 includes a format of the SCI2 and scheduling information of the PSSCH. The SCI2 includes information such as a hybrid automatic repeat request (hybrid automatic repeat request, HARQ) process number related to the data transmission. The PSCCH and the PSSCH are in a same slot. When receiving data, the terminal device may receive a signal slot by slot and buffer the signal, then detect the SCI1, and further demodulate the physical sidelink shared channel (physical sidelink shared channel, PSSCH) based on a detection result of the SCI1.

To further improve a capacity of the sidelink, the 3GPP organization is studying evolution of the sidelink on a millimeter-wave frequency band having a large-bandwidth spectrum resource. On the millimeter-wave frequency band, to overcome large channel fading, a transmit device and/or a receive device need/needs to transmit (i.e. send) and/or receive a signal by using a beamforming method, that is, transmit/receive the signal in a specific beam direction. Because one device in the sidelink may communicate with a plurality of devices, a very likely transmission mode is: For a control channel, beamforming is performed only at a transmitting end, so that a transmit beam is aligned with a receiving end. A receive device receives/detects control information through an omnidirectional beam or a quasi-omnidirectional beam, to receive control information of any transmit device. Beam indication information of a data/shared channel is carried in the control information, and the receive device adjusts a receive beam to receive the data/shared channel based on a corresponding indication. Because the control channel usually has a low bit rate, in an indoor short-distance scenario, transmission and reception of the control information can also be supported when beamforming is performed only at the transmitting end, and transmission needs to be performed on a data channel based on a high bit rate. If the receive beam at the receiving end cannot be adjusted to a correct direction in time, reception on the data channel is affected.

However, a current sidelink frame structure cannot support this transmission mode. Before receiving data, the receive device cannot complete reception and demodulation (which may also be understood as decoding) of the control information. Therefore, the receive device cannot correctly adjust the receive beam of the receive device for the data channel, and consequently receiving performance of the data channel is affected.

### SUMMARY

This application provides a communication method and device, so that in a sidelink scenario, a terminal device may first determine a spatial domain receive parameter of a second data channel based on indication information of the spatial domain receive parameter of the second data channel in a control channel or a first data channel. Therefore, when the second data channel is being received, the determined spatial domain receive parameter may be used, thereby improving a signal-to-noise ratio of the data channel and improving receiving performance of the data channel.

According to a first aspect, a communication method is provided. The method includes: A first device receives a control channel and a first data channel, where the first device receives the control channel and the first data channel based on a same spatial domain receive parameter, or the first device receives both the control channel and the first data channel through an omnidirectional beam, and indication information of a spatial domain receive parameter of a second data channel is carried on the control channel and/or the first data channel. The first device receives the second data channel based on the indication information of the spatial domain receive parameter.

In this application, in an implementation, the first device may receive the control channel and the first data channel through a default beam.

Based on this technical solution, the first device may receive the control channel through a default wide beam or an omnidirectional beam, so that the first device can receive control information of one or more of a plurality of devices at any time. The first device receives the control channel and the first data channel based on the same spatial domain receive parameter or through the omnidirectional receive beam, so that the first device can also receive some data information when receiving the control information, thereby improving resource utilization.

In addition, the indication information of the spatial domain receive parameter of the second data channel is carried on the control channel and/or the first data channel in this application, so that after demodulating (which may also be understood as decoding) the control channel and/or the first data channel, the first device may determine a beam for receiving the second data channel, thereby improving a signal-to-noise ratio of the second data channel, implementing a high data transmission rate of the second data channel, and improving receiving performance of the data channel.

In an implementation, first control information is carried on the control channel. The first control information includes frequency domain resource allocation indication information of the second data channel. The method further includes: The first device determines, based on the frequency domain resource allocation indication information, an end position of a frequency domain resource of the second data channel.

In this application, the end position of the frequency domain resource occupied by the second data channel may be determined based on the frequency domain allocation indication information that is of the second data channel and that is carried on the control channel and/or the first data channel. For example, the frequency domain allocation indication information of the second data channel may include at least a quantity of subchannels occupied by the second data channel.

Based on this technical solution, in this application, the first device may determine a position of the frequency domain resource of the second data channel based on the frequency domain resource allocation indication information.

In an implementation, a position of a time domain resource occupied by the first data channel is the same as a position of a time domain resource of the control channel. A start position of a frequency domain resource occupied by the first data channel is a next frequency domain subunit of an end frequency domain subunit occupied by the control channel, and an end position of the frequency domain resource occupied by the first data channel is the same as the end position of the frequency domain resource occupied by the second data channel. A start position of the frequency domain resource occupied by the second data channel is the same as a start frequency domain position of the control channel.

It may also be understood as that, in this application, frequency division multiplexing may be performed on the first data channel and the control channel, and time division multiplexing may be performed on the first data channel (or the control channel) and the second data channel.

Based on this technical solution, in this application, the first data channel may occupy a remaining resource of a time subunit in which the control channel is located, so that the remaining resource of the time subunit in which the control channel is located can be effectively used, thereby improving system resource utilization.

In an implementation, a 1^{st} symbol of the second data channel and a last symbol of the control channel are spaced by (K×M)+1 or (K×M)+2 time subunits in time domain. M is a quantity of time subunits included in one time unit. K is an integer greater than or equal to 1.

In this application, the time unit may be, for example, a time resource element such as a slot, a mini slot, a subframe, or a frame. The time subunit may be, for example, a time resource element such as a symbol, a slot, a mini slot, or a subframe. For example, when the time unit is the frame, the time subunit may be the subframe, the slot, the mini slot, or the symbol. For another example, when the time unit is the subframe, the time subunit may be the slot, the mini slot, or the symbol. For still another example, when the time unit is the slot, the time subunit may be the symbol.

Based on this technical solution, in this application, when the time unit is the slot and the time subunit is the symbol, cross-slot scheduling may be implemented. To be specific, the first device detects the control channel and the first data channel through the default wide beam or the omnidirectional beam. Because the second data channel and the control channel are spaced by a plurality of slots, the first device has sufficient time to demodulate the control channel and the first data channel, to determine whether there is a corresponding second data channel and determine a beam for receiving the second data channel, thereby improving the signal-to-noise ratio of receiving the second data channel and the transmission rate supported by the second data channel. In this solution, one or two additional time subunits are respectively used for automatic gain control (auto gain control, AGC) training and for a gap, also referred to as a guard interval. Details are described below.

In an implementation, information at a first time-frequency position is a repetition of information about a 1^{st} time subunit of the control channel and the first data channel. A time domain position of the first time-frequency position is a previous time subunit of the control channel and the first data channel. A frequency domain position of the first time-frequency position includes a frequency domain resource occupied by the control channel and the frequency domain resource occupied by the first data channel.

It may also be understood as that in this implementation, the information at the first time-frequency position is the same as the information about the 1^{st} time subunit of the control channel and the first data channel.

In an implementation, information at a second time-frequency position is a repetition of information about a 1^{st} time subunit of the second data channel. A time domain position of the second time-frequency position is a previous time subunit of the second data channel. A frequency domain position of the second time-frequency position is the same as the frequency domain resource occupied by the second data channel.

It may also be understood as that in this implementation, the information at the second time-frequency position is the same as the information about the 1^{st} time subunit of the second data channel.

Based on this technical solution, in a frame structure provided in this application, before receiving the control channel and the first data channel, the first device may first perform automatic gain control (auto gain control, AGC) training at the first time-frequency position, to improve the receiving performance of the control channel and the data channel.

Because this application may be applied to an SL communication system, channels between different transmit devices and the first device may vary significantly, that is, a near-far problem is generated. When blindly detecting the control channel and receiving the first data channel, the first device needs to determine a signal gain parameter of the first device, so that energy of a signal input to an analog-to-digital converter (analog to digital converter, ADC) on an entire carrier, a channel, an entire bandwidth part (bandwidth part, BWP), or a resource pool is stable. The first time-frequency position may be used for AGC training for the first device to receive the control channel and the first data channel.

Similarly, before receiving the second data channel, the first device may perform AGC training at the second time-frequency position. This is because the first device may receive the second data channel and the control channel through different beams, and energy of signals that are transmitted by other devices on a same carrier, channel, BWP, or resource pool and that are received on different time subunits is different. Therefore, the first device needs to perform new AGC training before receiving the second data. Signals of two AGC time subunits each is a repetition of a signal of a next time subunit of the AGC time subunit, so that the first device performs AGC training.

In an implementation, the first device is allocated to a first resource pool for communication. The first resource pool includes an x^{th} time subunit to a z^{th} time subunit in each time unit (which should be understood as a time unit included in the first resource pool). x and z are integers greater than 0. z is greater than x. The control channel and the first data channel occupy an (x+1)^{th} time subunit to an (x+y)^{th} time subunit in a time unit in which the control channel and the first data channel are located. y is a quantity of time subunits occupied by the control channel, and y is an integer greater than or equal to 1. A start time subunit of the second data channel is an (x+y+2)^{th} time subunit in a time unit in which the second data channel is located. Alternatively, a start time subunit of the second data channel is an (x+y+3)^{th} time subunit in a time unit in which the second data channel is located, and in each time unit, an (x+y+1)^{th} time subunit is a time subunit used for a gap.

In this application, x, y, and z may be higher-layer configured parameters or preconfigured parameters.

Based on this technical solution, positions of time subunits occupied by the control channel, the first data channel, and the second data channel in each time unit in the frame structure provided in this application are determined, so that another time subunit in each time unit can be occupied by another device. For example, when a transmit device corresponding to the first device transmits the control channel, the first data channel, and the corresponding AGC time subunit in an x^{th} time subunit to an (x+y)^{th} time subunit in a time unit, another device, for example, a third device, may transmit the second data channel and the corresponding AGC time subunit in a same frequency domain unit and an (x+y+2)^{th} time subunit to a (z-1)^{th} time subunit in the same time unit.

In addition, in each time unit, if the second data channel exists, a time subunit occupied by the second data channel is determined. Therefore, if the first device detects no control information in a previous time unit, it indicates that no other device transmits the second data channel to the first device, and the first device may not receive any signal in a corresponding time subunit, thereby achieving specific energy-saving gains.

In the frame structure provided in this application, all channels may not occupy a z^{th} time subunit in each time unit. It may also be understood as that the z^{th} time subunit is a time subunit used for a gap, and may be used by a device to perform receive/transmit conversion between transmitting (or receiving) the second data channel and receiving (or transmitting) the control channel and the first data channel. Similarly, in an implementation, all channels do not occupy an (x+y+1)^{th} time subunit, that is, the (x+y+1)^{th} time subunit is a time subunit used for a gap, and may be used by a device to perform receive/transmit conversion between transmitting (or receiving) the control channel and the first data channel and receiving (or transmitting) the second data channel.

In an implementation, the method further includes: The first device determines whether first data information is carried on the first data channel. When the first device determines that the first data information is carried on the first data channel, the first device receives the first data information on the first data channel.

In this embodiment, the first data channel and the second data channel are included. Therefore, when receiving data information, the first device may first determine whether data information (denoted as the first data information) exists ("exists" may also be understood as "is carried") on the first data channel. If the first device determines that the first data information exists on the first data channel, the first device may determine and decode the first data information (which may also be understood as a first transport block (transport block, TB)) received on the first data channel.

In an implementation, when the first device determines that the first data information exists on the first data channel, the first device may determine to decode both the first data information received on the first data channel and second data information (which may also be understood as a second transport block) received on the second data channel. If the first device determines that the first data information does not exist on the first data channel, the first device may determine to separately decode the data information received on the second data channel.

Based on this technical solution, in this embodiment, the first device determines whether data information exists on the first data channel, so that the first device may determine a manner of subsequently decoding the data information, thereby improving accuracy of data transmission.

In an implementation, first indication information is carried on the control channel or the first data channel, and the first indication information indicates whether the first data information is carried on the first data channel. The first device determines, based on the first indication information, whether to receive the first data information on the first data channel.

In an implementation, second control information is carried on the first data channel. The first device determines, based on at least one of a size of a time-frequency resource of the control channel, a size of the frequency domain resource of the second data channel, and a size of the second control information, whether to receive the first data information on the first data channel.

Based on this technical solution, in this application, a quantity of frequency domain subunits occupied by the first data channel is a quantity of frequency domain subunits occupied by the second data channel minus a quantity of frequency domain subunits occupied by the control channel. When the second data channel occupies a small quantity of frequency domain resources, the first data channel also occupies a small quantity of frequency domain resources. A transmit device corresponding to the first device may carry only second control information on the first data channel, and does not transmit any other additional data information. The first device may determine, according to this solution, whether the first device carries additional data information on the first data channel. The second control information may include information such as a hybrid automatic repeat request (hybrid automatic repeat request, HARQ) process number.

In an implementation, before the first device receives the first data channel, the method further includes: The first device determines whether the first data channel exists.

In an implementation, second indication information is further carried on the control channel. The second indication information indicates whether the first data channel exists. That the first device determines whether the first data channel exists includes: The first device determines, based on the second indication information, whether the first data channel exists.

In an implementation, that the first device determines whether the first data channel exists includes: The first device determines, based on at least one of the size of the time-frequency resource of the control channel, the size of the frequency domain resource of the second data channel, and the size of the second control information, whether the first data channel exists.

In an implementation, before the first device receives the first data channel, the method further includes: The first device determines whether the second control information is carried on the first data channel.

In an implementation, second indication information is further carried on the control channel. The second indication information indicates whether the second control information is carried on the first data channel. That the first device determines whether the second control information is carried on the first data channel includes: The first device determines, based on the second indication information, whether the second control information is carried on the first data channel.

In an implementation, that the first device determines whether the second control information is carried on the first data channel includes: The first device determines, based on at least one of the size of the time-frequency resource of the control channel, the size of the frequency domain resource of the second data channel, and the size of the second control information, whether the second control information is carried on the first data channel.

In this application, that the first device determines whether the second control information exists on the first data channel and that the first device determines whether the first data channel exists may be understood as equivalent. In other words, that the first device determines whether the second control information exists on the first data channel may also indicate that the first device determines whether the first data channel exists. In other words, if the first device determines that the second control information is not carried on the first data channel, the first device may determine that the first data channel does not exist either.

Based on this technical solution, in this application, the quantity of frequency domain subunits occupied by the first data channel is the quantity of frequency domain subunits occupied by the second data channel minus the quantity of frequency domain subunits occupied by the control channel. Therefore, when the second data channel occupies the small quantity of frequency domain resources, or the control information on the control channel occupies a large quantity of frequency domain resources, the transmit device corresponding to the first device may transmit only the control channel, but does not transmit the first data channel, and the first device may determine, according to this technical solution, whether the first data channel exists. In other words, if it is assumed that the second control information is preferentially carried on the first data channel. When the second data channel occupies the small quantity of frequency domain resources, or the control information on the control channel occupies the large quantity of frequency domain resources, neither the second control information nor additional data information is carried on the first data channel, and the second control information is carried on the second data channel.

In an implementation, the method further includes: When the first device determines that the first data channel exists, the first device receives the first data channel, and receives the second control information on the first data channel.

In an implementation, when the first device determines that the first data channel does not exist, the first device receives the second control information on the second data channel.

In an implementation, third indication information is carried on the control channel. When the first device determines that the first data channel exists, the first device determines an MCS of the first data channel based on the third indication information, the first device receives the second control information on the first data channel, and the first device determines an MCS of the second data channel based on the second control information. When the first device determines that the first data channel does not exist, the first device determines an MCS of the second data channel based on an indication of the third indication information.

In an implementation, the method further includes: When the first device determines that the second control information is carried on the first data channel, the first device receives the first data channel.

In an implementation, when the first device determines that the second control information is not carried on the first data channel, the first device receives the second control information on the second data channel.

In an implementation, third indication information is carried on the control channel. When the first device determines that the second control information is carried on the first data channel, the first device determines an MCS of the first data channel based on the third indication information, and the first device determines an MCS of the second data channel based on the second control information. When the first device determines that the second control information is not carried on the first data channel, the first device determines an MCS of the second data channel based on the third indication information.

Based on this technical solution, in this application, the first device may flexibly determine the MCS of the second data channel.

In an implementation, first control information is carried on the control channel. The second control information is carried on the first data channel. That indication information of a spatial domain receive parameter of a second data channel is carried on the control channel and/or the first data channel includes: The first control information and/or the second control information include/includes the indication information of the spatial domain receive parameter of the second data channel.

Based on this technical solution, in this application, the indication information of the spatial domain receive parameter of the second data channel may be carried in the control information.

In an implementation, that the first control information and the second control information include the indication information of the spatial domain receive parameter of the second data channel includes: The first control information includes a first field, and the first field indicates identification information of a transmit device corresponding to the first device. The second control information includes a second field, and the second field indicates the transmit device corresponding to the first device to transmit indication information of a spatial domain transmit parameter of the second data channel.

Based on this technical solution, in this application, the indication information of the spatial domain receive parameter of the second data channel may be jointly indicated in different fields in different control information, thereby improving flexibility of configuring the indication information of the spatial domain receive parameter of the second data channel.

According to a second aspect, a communication method is provided. The method includes: A first device receives a control channel and a data channel in a same time unit. The first device receives the control channel and the data channel based on a same spatial domain receive parameter. Alternatively, the first device receives both the control channel and the data channel through an omnidirectional receive beam. A target data subchannel is carried on the data channel. The target data subchannel and the control channel are located in different time subunits. Information at a third time-frequency position is a repetition of information about a 1^{st} time subunit of the target data subchannel. A time domain position of the third time-frequency position is a previous time subunit of the target data subchannel. A frequency domain position of the third time-frequency position is the same as a frequency domain resource occupied by the target data subchannel.

In this embodiment, it may also be understood as that the information at the third time-frequency position is the same as the information about the 1^{st} time subunit of the target data subchannel.

Based on this technical solution, for transmission of some small packets, when a channel condition is good, scheduling in a same time unit can be implemented, thereby reducing a packet scheduling delay. In addition, if this system is deployed on an unlicensed millimeter-wave frequency band, a terminal needs to perform listen before talk before transmitting data, and a transmit device corresponding to the first device needs to perform listen before talk only once, thereby reducing listen before talk overheads.

In addition, when a frame structure according to the second aspect and the frame structure according to the first aspect coexist in a same resource pool, the first device may receive, on a time subunit in which the control channel is located and a time subunit in which the target data subchannel is located, signals transmitted by different other devices, and energy of the signals also differs greatly. In this application, the first device can perform AGC training at the third time-frequency position before receiving the target data subchannel, thereby improving receiving performance of the data channel.

In an implementation, fourth indication information is carried on the control channel, and the fourth indication information indicates that the data channel is scheduled by the control channel.

Based on this technical solution, the data channel in this embodiment may be scheduled by the control channel.

In an implementation, a first field is carried on the control channel. The first field indicates the spatial domain receive parameter of the data channel. The method further includes: When a value of the first field is equal to a first preset value, the first device determines that the control channel and the data channel are in the same time unit.

In an implementation, indication information of a time resource of the data channel is carried on the control channel. The method further includes: The first device receives the control channel and the data channel in the same time unit based on the indication information.

Based on this technical solution, when a format of the control channel is the same as a format of the control channel in the first aspect, the first device may flexibly determine that the control channel and the data channel are in the same time unit.

In an implementation, the first device is allocated to a first resource pool for communication. The first resource pool includes an x^{th} time subunit to a z^{th} time subunit in each time unit (which should be understood as a time unit included in the first resource pool), where x and z are integers greater than 0, and z is greater than x. The control channel occupies an (x+1)^{th} time subunit to an (x+y)^{th} time subunit in the time unit in which the control channel is located. y is a quantity of time subunits occupied by the control channel. y is an integer greater than or equal to 1. A start time subunit of the target data subchannel is an (x+y+2)^{th} time subunit of the target data subchannel in the time unit. Alternatively, a start time subunit of the target data subchannel is an (x+y+3)^{th} time subunit in the time unit, and an (x+y+1)^{th} time subunit is a time subunit used for a gap.

In this application, x, y, and z may be higher-layer configured parameters or preconfigured parameters.

Based on this technical solution, when a resource pool is shared with the device in the first aspect, an (x+y+1)^{th} time subunit in each time subunit is a gap used for the device in the first aspect. Therefore, the device in the first aspect does not transmit information in the time subunit. If the device in the second aspect performs transmission and reception in the time subunit, an AGC problem occurs in the device in the second aspect, affecting receiving performance. Therefore, the device in the second aspect does not receive or transmit a signal in the time subunit.

According to a third aspect, a communication method is provided. The method includes: A first device periodically receives a control channel, a first data channel, and a second data channel. In an (n+1)^{th} period, the first device receives the control channel, the first data channel, and the second data channel in a same time unit. The first device receives the control channel and the first data channel based on a same spatial domain receive parameter. Alternatively, the first device receives both the control channel and the first data channel through an omnidirectional receive beam. n is an integer greater than or equal to 1.

Based on this technical solution, the control channel, the first data channel, and the second data channel may be transmitted in the same time unit, thereby reducing a data transmission delay. In addition, because all channels in a period are in a same time unit, a transmit device corresponding to the first device needs to perform listen before talk only once, thereby reducing listen before talk overheads. In addition, because the channels are periodic, the first device may determine a time-frequency position and a receive beam of the second data channel in advance, thereby improving a signal-to-noise ratio and a supported transmission rate of the data channel.

In this embodiment, the control channel in a same time unit may schedule the first data channel and the second data channel in the same time unit.

In an implementation, in each period, a position of a time domain resource occupied by the first data channel is the same as a position of a time domain resource of the control channel. In each period, a start position of a frequency domain resource occupied by the first data channel is a next frequency domain subunit of an end frequency domain subunit occupied by the control channel, and an end position of the frequency domain resource occupied by the first data channel is the same as an end position of a frequency domain resource occupied by the second data information.

In an implementation, in an n^{th} period, indication information of a spatial domain receive parameter of the second data channel in the (n+1)^{th} period is carried on the control channel and/or the first data channel, and the method further includes: In the (n+1)^{th} period, the first device receives the second data channel based on the indication information of the spatial domain receive parameter.

Based on this technical solution, in this application, in the (n+1)^{th} (n is an integer greater than 1) period, the first device may receive the second data channel based on the indication information of the spatial domain receive parameter received in the previous period, thereby improving the signal-to-noise ratio of transmission of the data channel.

In an implementation, in the n^{th} period, indication information of a spatial domain receive parameter of the control channel and indication information of a spatial domain receive parameter of the first data channel in the (n+1)^{th} period are further carried on the control channel and/or the first data channel. The method further includes: In the (n+1)^{th} period, the first device receives the control channel and the first data channel based on the indication information of the spatial domain receive parameters.

In this application, in an implementation, the indication information of the spatial domain receive parameter may be specifically a field that indicates the spatial domain receive parameter of the control channel, the spatial domain receive parameter of the first data channel, and the spatial domain receive parameter of the second data channel at the same time.

Based on this technical solution, in this application, in the (n+1)^{th} period, the first device may receive the control channel and the first data channel based on the indication information of the spatial domain receive parameter received in the previous period, thereby improving a signal-to-noise ratio of transmission on of the control channel.

In an implementation, before the first device periodically receives the control channel, the first data channel, and the second data channel in a same time unit, the method further includes: The first device receives a first trigger message. The first trigger message indicates that when a time after the first device receives the first trigger message is greater than or equal to a first time threshold, the first device starts to periodically receive the control channel, the first data channel, and the second data channel in the same time unit.

In this application, the first time threshold may be higher-layer configured or preconfigured.

According to a fourth aspect, a communication method is provided. The method includes: A first device receives a control channel, a first data channel, and A second data channels, where A is a positive integer. The first device receives the control channel and the first data channel based on a same spatial domain receive parameter, or the first device receives both the control channel and the first data channel through an omnidirectional receive beam. Indication information of a spatial domain receive parameter of the A second data channels is carried on the control channel and/or the first data channel. The first device receives the A second data channels based on the indication information of the spatial domain receive parameter. The control channel, the first data channel, and the second data channels occupy a plurality of time units. A start time subunit of a 1^{st} second data channel in the A second data channels is a 2^{nd} time subunit or a 3^{rd} time subunit following an end time domain time subunit of the first data channel. The control channel, the first data channel, and the A second data channels are associated.

In this application, the control channel, the first data channel, and the A second data channels are associated. It may also be understood as that data channels scheduled by the control channel are the first data channel and the A second data channels. The control information on the control channel and/or the first data channel may indicate the spatial domain receive parameter of the A second data channels and information related to an MCS of the second data channel. In addition, the control channel, the first data channel, and the A second data channels may occupy the plurality of time units.

In this application, because the A second data channels may be continuous in time, a transmit device corresponding to the first device needs to perform listen before talk only once, thereby reducing listen before talk overheads.

Based on this technical solution, one single piece of control information is allowed to schedule a plurality of second data channels, thereby reducing control signaling overheads.

In an implementation, frequency domain resource allocation indication information and/or time domain allocation indication information of the A second data channels are/is carried on the control channel, and the method further includes: The first device determines a position of a time-frequency resource of the first data channel based on a position of a time-frequency resource of the control channel and a position of a time-frequency resource of the A second data channels.

In an implementation, a start time domain position of the first data channel is the same as a start time domain position of the control channel. In a time subunit in which the control channel is located, a start position of a frequency domain resource occupied by the first data channel is a next frequency domain subunit of an end frequency domain subunit occupied by the control channel. In a time subunit in which the control channel is not located, a start frequency domain position of the first data channel is the same as a start frequency domain position of the control channel, and an end position of the frequency domain resource occupied by the first data channel is the same as an end position of a frequency domain resource occupied by the A second data channels.

When there is no remaining resource in the time subunit in which the control channel is located or there are few remaining resources, the resource of the first data channel does not occupy the time subunit in which the control channel is located. It may be understood as a special case in which the first data channel occupies zero frequency domain subunits in the time subunit in which the control channel is located. This case does not affect an essence of the technical solution of this application and is not further described in this application.

In an implementation, first control information is carried on the control channel. Second control information and first data information are carried on the first data channel. A pieces of second data information are carried on the A second data channels. The first control information includes indication information of a modulation and coding scheme MCS of the first data channel and the indication information of the spatial domain receive parameter of the A second data channels. The second control information includes indication information of an MCS of the A second data channels.

In an implementation, the 1^{st} second data channel in the A second data channels and the control channel are spaced by L time subunits in time domain, and L is an integer greater than or equal to 1.

Based on this technical solution, in this application, a time interval between the control channel and the second data channel is allowed to be more flexibly configured based on a capability of a receive device (that is, a start position of the 1^{st} second data channel is allowed to be more flexible), and may not be configured at a granularity of a time unit.

In an implementation, the first device is allocated to a second resource pool for communication. The second resource pool occupies an x^{th} time subunit to a z^{th} time subunit in each time unit (which should be understood as a time unit included in the second resource pool), where x and z are integers greater than 0, and z is greater than x. In a time unit in which the 1^{st} second data channel is located, an end time domain time subunit of the 1^{st} second data channel does not exceed a (z-1)^{th} time subunit in the time unit. In a time unit in which a v^{th} second data channel in the A second data channels is located, v is an integer greater than 1, a start time subunit of the v^{th} second data channel is an (x+1)^{th} time subunit, and an end time subunit of the v^{th} second data channel does not exceed a (z-1)^{th} time subunit in the time unit. The z^{th} time subunit in each time unit is a time subunit used for a gap.

In an implementation, a fourth time-frequency position exists before each second data channel. Information at the fourth time-frequency position is a repetition of information about a 1^{st} time subunit of the second data channel. A time domain position of the fourth time-frequency position is a previous time subunit of the second data channel. A frequency domain position of the fourth time-frequency position is the same as a frequency domain position of the second data channel.

This implementation may also be understood as that the information at the fourth time-frequency position is the same as the information about the 1^{st} time subunit of the second data channel.

In an implementation, the first device is allocated to the second resource pool for communication. A same spatial domain transmit parameter is used when another device in the second resource pool transmits an associated control channel, an associated first data channel, and associated A second data channels. An end time domain time subunit of the first data channel transmitted by the another device in the second resource pool and a start time subunit of at least one second data channel associated with the first data channel of the another device are spaced by one time subunit or two time subunits.

Based on this solution, all devices in the resource pool need to perform transmission and reception based on a frame structure of the first device, so that in addition to the time subunit used for a gap, the transmit device continuously transmits, through a same transmit beam, the control channel, the first data channel, the A second data channels, and information used for AGC training in the resource pool, thereby slightly affecting AGC training of another receive device.

According to a fifth aspect, a communication method is provided. The method includes: A first device receives a control channel and a second data channel, where second indication information is carried on the control channel, and the second indication information indicates whether a first data channel exists. When determining, based on the second indication information, that the first data channel exists, the first device receives the first data channel, where the first device receives the control channel and the first data channel based on a same spatial domain receive parameter, or the first device receives both the control channel and the first data channel through an omnidirectional receive beam.

According to a sixth aspect, a communication method is provided. The method includes: A first device receives a control channel and a second data channel, where second indication information is carried on the control channel, and the second indication information indicates whether second control information is carried on a first data channel. When determining, based on the second indication information, that the second control information is carried, the first device receives the first data channel, where the first device receives the control channel and the first data channel based on a same spatial domain receive parameter, or the first device receives both the control channel and the first data channel through an omnidirectional receive beam.

According to a seventh aspect, a communication method is provided. The method includes: A first device receives a control channel and a second data channel. The first device determines, based on at least one of a size of a time-frequency resource of the control channel, a size of a frequency domain resource of the second data channel, and whether second control information is carried on the first data channel, whether a first data channel exists. When determining that the first data channel exists, the first device receives the first data channel. The first device receives the control channel and the first data channel based on a same spatial domain receive parameter, or the first device receives both the control channel and the first data channel through an omnidirectional receive beam.

According to an eighth aspect, a communication method is provided. The method includes: A first device receives a control channel and a second data channel. The first device determines, based on at least one of a size of a time-frequency resource of the control channel, a size of a frequency domain resource of the second data channel, and whether second control information is carried on the first data channel, whether second control information is carried on the first data channel. When determining that the second control information is carried on the first data channel, the first device receives the first data channel. The first device receives the control channel and the first data channel based on a same spatial domain receive parameter, or the first device receives both the control channel and the first data channel through an omnidirectional receive beam.

Based on these technical solutions in any one of the fifth aspect to the eighth aspect, a quantity of frequency domain subunits occupied by the first data channel is a quantity of frequency domain subunits occupied by the second data channel minus a quantity of frequency domain subunits occupied by the control channel. Therefore, when the second data channel occupies a small quantity of frequency domain resources, or the control information on the control channel occupies a large quantity of frequency domain resources, a transmit device corresponding to the first device may transmit only the control channel, but does not transmit the first data channel, and the first device may determine, according to these technical solutions, whether the first data channel exists. In other words, if it is assumed that the second control information is preferentially carried on the first data channel. When the second data channel occupies the small quantity of frequency domain resources, or the control information on the control channel occupies the large quantity of frequency domain resources, the second control information is not carried on the first data channel, and is carried on the second data channel.

According to any one of the fifth aspect to the eighth aspect, in an implementation, indication information of a spatial domain receive parameter of the second data channel is carried on the control channel and/or the first data channel, and the first device receives the second data channel based on the indication information of the spatial domain receive parameter.

According to a ninth aspect, a communication method is provided. The method includes: A second device transmits a control channel and a first data channel, where the second device transmits the control channel and the first data channel based on a same spatial domain transmit parameter, and indication information of a spatial domain receive parameter of a second data channel is carried on the control channel and/or the first data channel. The second device transmits the second data channel based on a spatial domain transmit parameter corresponding to the spatial domain receive parameter.

Based on this technical solution, in this application, the second device may transmit the control channel and the first data channel based on the same spatial domain transmit parameter, so that the second device may further transmit some data information when transmitting control information, thereby improving resource utilization. In addition, the indication information of the spatial domain receive parameter of the second data channel is carried on the control channel and/or the first data channel in this application, so that after demodulating/decoding the control channel and/or the first data channel, the first device may determine a beam for receiving the second data channel, thereby improving a signal-to-noise ratio of the second data channel, and implementing a high data transmission rate of the second data channel.

In an implementation, the second device transmits the control channel, the first data channel, and the second data channel based on the same spatial domain transmit parameter.

Based on this technical solution, in this application, a transmitting end may transmit the control channel, the first data channel, and the second data channel through a directional beam, and the same spatial domain transmit parameter may be used to transmit the control channel, the first data channel, and the second data channel.

In an implementation, first control information is carried on the control channel. The first control information includes frequency domain resource allocation indication information of the second data channel. The frequency domain resource allocation indication information of the second data channel is used by a receive device corresponding to the second device to determine an end position of a frequency domain resource of the second data channel.

In this application, the end position of the frequency domain resource occupied by the second data channel may be determined based on the frequency domain allocation indication information that is of the second data channel and that is carried on the control channel and/or the first data channel. For example, the frequency domain allocation indication information of the second data channel may include at least a quantity of subchannels occupied by the second data channel.

In an implementation, a position of a time domain resource occupied by the first data channel is the same as a position of a time domain resource of the control channel. A start position of a frequency domain resource occupied by the first data channel is a next frequency domain subunit of an end frequency domain subunit occupied by the control channel, and an end position of the frequency domain resource occupied by the first data channel is the same as the end position of the frequency domain resource occupied by the second data channel.

In an implementation, the method further includes: A 1^{st} symbol of the second data channel and a last symbol of the control channel are spaced by (K×M)+1 or (K×M)+2 time subunits in time domain. M is a quantity of time subunits included in one time unit. K is an integer greater than or equal to 1.

In an implementation, the second device duplicates a 1^{st} time subunit of the control channel and the first data channel to a previous time subunit of the first data channel.

In other words, the implementation may also be understood as that a first time-frequency position exists before the control channel and the first data channel. Information at the first time-frequency position is a repetition of information about a 1^{st} time subunit of the control channel and the first data channel. A time domain position of the first time-frequency position is a previous time subunit of the control channel and the first data channel. A frequency domain position of the first time-frequency position includes a frequency domain resource occupied by the control channel and the frequency domain resource occupied by the first data channel.

It may also be understood as that in this implementation, the information at the first time-frequency position is the same as the information about the 1^{st} time subunit of the control channel and the first data channel. Details are not described below again.

In an implementation, the second device duplicates a 1^{st} time subunit of the second data channel to a previous time subunit of the second data channel.

In other words, the implementation may also be understood as that a second time-frequency position exists before the second data channel. Information at the second time-frequency position is a repetition of information about a 1^{st} time subunit of the second data channel. A time domain position of the second time-frequency position is a previous time subunit of the second data channel. A frequency domain position of the second time-frequency position is the same as the frequency domain resource occupied by the second data channel.

It may also be understood as that in this implementation, the information at the second time-frequency position is the same as the information about the 1^{st} time subunit of the second data channel. Details are not described below again.

Based on this solution, before transmitting the control channel and the first data channel, the second device first transmits an additional repeated time subunit for AGC training at a receiving end.

Based on this solution, before transmitting the second data channel, the second device also first transmits an additional repeated time subunit for AGC training at the receiving end.

In an implementation, a first resource pool includes an x^{th} time subunit to a z^{th} time subunit in each time unit (which should be understood as a time unit included in the first resource pool). x and z are integers greater than 0. z is greater than x. The control channel and the first data channel occupy an (x+1)^{th} time subunit to an (x+y)^{th} time subunit in a time unit in which the control channel and the first data channel are located. y is a quantity of time subunits occupied by the control channel, and y is an integer greater than or equal to 1. A start time subunit of the second data channel is an (x+y+2)^{th} time subunit in a time unit in which the second data channel is located. Alternatively, a start time subunit of the second data channel is an (x+y+3)^{th} time subunit in a time unit in which the second data channel is located, and in each time unit, an (x+y+1)^{th} time subunit is a time subunit used for a gap.

In an implementation, first control information is carried on the control channel. The second control information is carried on the first data channel. That indication information of a spatial domain receive parameter of a second data channel is carried on the control channel and/or the first data channel includes: The first control information and/or the second control information include/includes the indication information of the spatial domain receive parameter of the second data channel.

Based on this technical solution, in this application, the indication information of the spatial domain receive parameter of the second data channel may be carried in the control information.

In an implementation, that the first control information and the second control information include the indication information of the spatial domain receive parameter of the second data channel includes: The first control information includes a first field, and the first field indicates identification information of the second device. The second control information includes a second field, and the second field indicates the second device to transmit indication information of a spatial domain transmit parameter of the second data channel.

Based on this technical solution, in this application, the indication information of the spatial domain receive parameter of the second data channel may be jointly indicated in different fields in different control information, thereby improving flexibility of configuring the indication information of the spatial domain receive parameter of the second data channel.

According to a tenth aspect, a communication method is provided. The method includes: A second device transmits a control channel and a data channel in a same time unit, where a target data subchannel is carried on the data channel, and the target data subchannel and the control channel are located in different time subunits. The second device duplicates a 1^{st} time subunit of the target data subchannel to a previous time subunit of the target data subchannel.

It may also be understood as that a third time-frequency position exists before the target data subchannel. Information at the third time-frequency position is a repetition of information about a 1^{st} time subunit of the target data subchannel. A time domain position of the third time-frequency position is a previous time subunit of the target data subchannel. A frequency domain position of the third time-frequency position is the same as a frequency domain resource occupied by the target data subchannel.

In this embodiment, it may also be understood as that the information at the third time-frequency position is the same as the information about the 1^{st} time subunit of the target data subchannel. Details are not described below again.

Based on this technical solution, for transmission of some small packets, when a channel condition is good, scheduling in a same time unit can be implemented, thereby reducing a packet scheduling delay. In addition, if this system is deployed on an unlicensed millimeter-wave frequency band, a terminal needs to perform listen before talk before transmitting data, and the second device needs to perform listen before talk only once, thereby reducing listen before talk overheads.

Further, when a frame structure in the tenth aspect and a frame structure in the ninth aspect coexist in a same resource pool, a receive device corresponding to the second device may receive, on a time subunit in which the control channel is located and a time subunit in which the target data subchannel is located, signals transmitted by different other devices, and energy of the signals also differs greatly. In this application, the second device adds, before the target data subchannel, an additional time subunit used for AGC training, to ensure that the receive device of the second device can perform AGC training at the third time-frequency position before receiving the target data subchannel, thereby improving receiving performance of the data channel.

In an implementation, fourth indication information is carried on the control channel, and the fourth indication information indicates that the data channel is scheduled by the control channel.

Based on this technical solution, the data channel in this embodiment may be scheduled by the control channel.

In an implementation, a first field is carried on the control channel. The first field indicates a spatial domain receive parameter of the data channel. The method further includes: The second device determines a first preset value. When the second device transmits the control channel and the data channel in the same time unit, a value of the first field is equal to the first preset value.

In an implementation, indication information of a time resource of the data channel is carried on the control channel, and the indication information of the time resource indicates that the control channel and the data channel are in the same time unit.

For example, when a bit of the indication information is equal to a value (for example, when the bit of the indication information is 0), it may be indicated that the control channel and the data channel are in the same time unit.

In an implementation, the second device is allocated to a first resource pool for communication. The first resource pool includes an x^{th} time subunit to a z^{th} time subunit in each time unit (which should be understood as a time unit included in the first resource pool), where x and z are integers greater than 0, and z is greater than x. The control channel occupies an (x+1)^{th} time subunit to an (x+y)^{th} time subunit in the time unit in which the control channel is located. y is a quantity of time subunits occupied by the control channel. y is an integer greater than or equal to 1. The target data subchannel occupies an (x+y+2)^{th} time subunit in a time unit in which the target data subchannel is located. Alternatively, a start time subunit of the target data subchannel is an (x+y+3)^{th} time subunit in the time unit, and an (x+y+1)^{th} time subunit is a time subunit used for a gap.

According to an eleventh aspect, a communication method is provided. The method includes: A second device periodically transmits a control channel, a first data channel, and a second data channel. In an (n+1)^{th} period, the second device transmits the control channel, the first data channel, and the second data channel in a same time unit. The second device transmits the control channel and the first data channel based on a same spatial domain transmit parameter, and n is an integer greater than or equal to 1.

Based on this technical solution, the control channel, the first data channel, and the second data channel may be transmitted in the same time unit, thereby reducing a data transmission delay. In addition, because all channels in a period are in a same time unit, the second device needs to perform listen before talk only once, thereby reducing listen before talk overheads. In addition, because the channels are periodic, a receive device corresponding to the second device may determine a time-frequency position and a receive beam of the second data channel in advance, thereby improving a signal-to-noise ratio and a supported transmission rate of the data channel.

In this embodiment, the control channel in a same time unit may schedule the first data channel and the second data channel in the same time unit.

In an implementation, the second device duplicates a 1^{st} time subunit of the second data channel to a previous time subunit of the second data channel.

In an implementation, in each period, a position of a time domain resource occupied by the first data channel is the same as a position of a time domain resource of the control channel. In each period, a start position of a frequency domain resource occupied by the first data channel is a next frequency domain subunit of an end frequency domain subunit occupied by the control channel, and an end position of the frequency domain resource occupied by the first data channel is the same as an end position of a frequency domain resource occupied by the second data information.

In an implementation, in an n^{th} period, indication information of a spatial domain receive parameter of the second data channel in the (n+1)^{th} period is carried on the control channel and/or the first data channel. In the (n+1)^{th} period, the second device transmits the second data channel based on a spatial domain transmit parameter corresponding to the spatial domain receive parameter.

In an implementation, in the n^{th} period, indication information of a spatial domain receive parameter of the control channel and indication information of a spatial domain receive parameter of the first data channel in the (n+1)^{th} period are further carried on the control channel and/or the first data channel. In the (n+1)^{th} period, the second device transmits the control channel and the first data channel based on the spatial domain transmit parameter corresponding to the spatial domain receive parameter.

In an implementation, before the second device periodically transmits the control channel, the first data channel, and the second data channel in a same time unit, the method further includes: The second device transmits a first trigger message. The first trigger message indicates that when a time after the second device transmits the first trigger message is greater than or equal to a first time threshold, the second device starts to periodically transmit the control channel, the first data channel, and the second data channel in the same time unit.

According to a twelfth aspect, a communication method is provided. The method includes: A second device transmits a control channel, a first data channel, and A second data channels, where A is a positive integer. The second device transmits the control channel, the first data channel, and the A second data channels based on a same spatial domain transmit parameter. Indication information of a spatial domain receive parameter of the A second data channels is carried on the control channel and/or the first data channel. The control channel, the first data channel, and the second data channel occupy a plurality of time units. A start time subunit of a 1^{st} second data channel in the A second data channels is a 2^{nd} time subunit or a 3^{rd} time subunit following an end time domain time subunit of the first data channel. The control channel, the first data channel, and the A second data channels are associated.

Because the A second data channels may be continuous in time, the second device needs to perform listen before talk only once, thereby reducing listen before talk overheads.

Based on this technical solution, one single piece of control information is allowed in this application to schedule a plurality of second data channels, thereby reducing control signaling overheads.

Based on this technical solution, the second device transmits a plurality of channels through a same beam, and energy of a signal received by another device from the second device does not fluctuate greatly when the another device does not change a receive beam of the another device, thereby reducing impact on AGC of the another device.

In an implementation, frequency domain resource allocation indication information of the A second data channels and/or time domain resource allocation indication information of the A second data channels are carried on the control channel.

In an implementation, a start time domain position of the first data channel is the same as a start time domain position of the control channel. In a time subunit in which the control channel is located, a start position of a frequency domain resource occupied by the first data channel is a next frequency domain subunit of an end frequency domain subunit occupied by the control channel. In a time subunit in which the control channel is not located, a start frequency domain position of the first data channel is the same as a start frequency domain position of the control channel, and an end position of the frequency domain resource occupied by the first data channel is the same as an end position of a frequency domain resource occupied by the A second data channels.

In an implementation, first control information is carried on the control channel. Second control information and first data information are carried on the first data channel. A pieces of second data information are carried on the A second data channels. The first control information includes indication information of a modulation and coding scheme MCS of the first data channel and the indication information of the spatial domain receive parameter of the A second data channels. The second control information includes indication information of an MCS of the A second data channels.

In an implementation, the 1^{st} second data channel in the A second data channels and the control channel are spaced by L time subunits in time domain, and L is an integer greater than or equal to 1.

In an implementation, the second device is allocated to a second resource pool for communication. The second resource pool occupies an x^{th} time subunit to a z^{th} time subunit in each time unit, where x and z are integers greater than 0, and z is greater than x. In a time unit in which the 1^{st} second data channel is located, an end time domain time subunit of the 1^{st} second data channel does not exceed a (z-1)^{th} time subunit in the time unit. In a time unit in which a v^{th} second data channel in the A second data channels is located, v is an integer greater than 1, a start time subunit of the v^{th} second data channel is an (x+1)^{th} time subunit, and an end time subunit of the v^{th} second data channel does not exceed a (z-1)^{th} time subunit in the time unit.

In an implementation, for each second data subchannel, the second device duplicates information about a 1^{st} time subunit of the second data subchannel to a previous time subunit of the second data subchannel.

In this application, the implementation may also be understood as that a fourth time-frequency position exists before each second data channel. Information at the fourth time-frequency position is a repetition of information about the 1^{st} time subunit of the second data channel. A time domain position of the fourth time-frequency position is the previous time subunit of the second data channel. A frequency domain position of the fourth time-frequency position is the same as a frequency domain position of the second data channel.

In this embodiment, it may also be understood as that the information at the fourth time-frequency position is the same as the information about the 1^{st} time subunit of the second data channel. Details are not described below again.

In an implementation, the second device is allocated to the second resource pool for communication. A same spatial domain transmit parameter is used when another device in the second resource pool transmits an associated control channel, an associated first data channel, and associated A second data channels. An end time domain time subunit of the first data channel of the another device in the second resource pool and a start time subunit of at least one second data channel associated with the first data channel of the another device are spaced by one time subunit or two time subunits.

According to a thirteenth aspect, a communication device is provided. The device includes a transceiver unit and a processing unit. The transceiver unit is configured to receive a control channel and a first data channel, where the transceiver unit receives the control channel and the first data channel based on a same spatial domain receive parameter, or the transceiver unit receives both the control channel and the first data channel through an omnidirectional beam, and indication information of a spatial domain receive parameter of a second data channel is carried on the control channel and/or the first data channel. The processing unit is configured to indicate, based on the indication information of the spatial domain receive parameter, the transceiver unit to receive the spatial domain receive parameter of the second data channel, and the transceiver unit receives the second data channel based on the spatial domain receive parameter.

In an implementation, first control information is carried on the control channel. The first control information includes frequency domain resource allocation indication information of the second data channel. The processing unit is configured to determine, based on the frequency domain resource allocation indication information, an end position of a frequency domain resource of the second data channel.

In this application, the end position of the frequency domain resource occupied by the second data channel may be determined based on the frequency domain allocation indication information that is of the second data channel and that is carried on the control channel and/or the first data channel. For example, the frequency domain allocation indication information of the second data channel may include at least a quantity of subchannels occupied by the second data channel.

In an implementation, a position of a time domain resource occupied by the first data channel is the same as a position of a time domain resource of the control channel. A start position of a frequency domain resource occupied by the first data channel is a next frequency domain subunit of an end frequency domain subunit occupied by the control channel, and an end position of the frequency domain resource occupied by the first data channel is the same as the end position of the frequency domain resource occupied by the second data channel.

In an implementation, a 1^{st} symbol of the second data channel and a last symbol of the control channel are spaced by (K×M)+1 or (K×M)+2 time subunits in time domain. M is a quantity of time subunits included in one time unit. K is an integer greater than or equal to 1.

In an implementation, information at a first time-frequency position is a repetition of information about a 1^{st} time subunit of the control channel and the first data channel. A time domain position of the first time-frequency position is a previous time subunit of the control channel and the first data channel. A frequency domain position of the first time-frequency position includes a frequency domain resource occupied by the control channel and the frequency domain resource occupied by the first data channel.

In an implementation, information at a second time-frequency position is a repetition of information about a 1^{st} time subunit of the second data channel. A time domain position of the second time-frequency position is a previous time subunit of the second data channel. A frequency domain position of the second time-frequency position is the same as the frequency domain resource occupied by the second data channel.

In an implementation, a first resource pool includes an x^{th} time subunit to a z^{th} time subunit in each time unit (which should be understood as a time unit included in the first resource pool). x and z are integers greater than 0. z is greater than x. The control channel and the first data channel occupy an (x+1)^{th} time subunit to an (x+y)^{th} time subunit in a time unit in which the control channel and the first data channel are located. y is a quantity of time subunits occupied by the control channel, and y is an integer greater than or equal to 1. A start time subunit of the second data channel is an (x+y+2)^{th} time subunit in a time unit in which the second data channel is located. Alternatively, a start time subunit of the second data channel is an (x+y+3)^{th} time subunit in a time unit in which the second data channel is located, and in each time unit, an (x+y+1)^{th} time subunit is a time subunit used for a gap.

In an implementation, the processing unit is configured to determine whether first data information is carried on the first data channel. When the processing unit determines that the first data information is carried on the first data channel, the transceiver unit receives the first data information on the first data channel.

In an implementation, first indication information is carried on the control channel or the first data channel, and the first indication information indicates whether the first data information is carried on the first data channel. That the processing unit is configured to determine whether first data information is carried on the first data channel includes: The processing unit is configured to determine, based on the first indication information, whether to receive the first data information on the first data channel.

In an implementation, second control information is carried on the first data channel. That the processing unit is configured to determine whether first data information is carried on the first data channel includes: The processing unit is configured to determine, based on at least one of a size of a time-frequency resource of the control channel, a size of the frequency domain resource of the second data channel, and a size of the second control information, whether to receive the first data information on the first data channel.

In an implementation, before the transceiver unit receives the first data channel, the processing unit is configured to determine whether the first data channel exists.

In an implementation, second indication information is further carried on the control channel. The second indication information indicates whether the first data channel exists. That the processing unit is configured to determine whether the first data channel exists includes: The processing unit is configured to determine, based on the second indication information, whether the first data channel exists.

In an implementation, that the processing unit is configured to determine whether the first data channel exists includes: The processing unit is configured to determine, based on at least one of the size of the time-frequency resource of the control channel, the size of the frequency domain resource of the second data channel, and the size of the second control information, whether the first data channel exists.

In an implementation, when the processing unit determines that the first data channel exists, the processing unit is configured to indicate the transceiver unit to receive the first data channel.

In an implementation, when the processing unit determines that the first data channel does not exist, the processing unit is configured to indicate the transceiver unit to receive the second control information on the second data channel.

In an implementation, before the transceiver unit is configured to receive the first data channel, the processing unit is further configured to determine whether the second control information is carried on the first data channel.

In an implementation, second indication information is further carried on the control channel. The second indication information indicates whether the second control information is carried on the first data channel. That the processing unit is configured to determine whether the second control information is carried on the first data channel includes: The processing unit is configured to determine, based on the second indication information, whether the second control information is carried on the first data channel.

In an implementation, that the processing unit is configured to determine whether the second control information is carried on the first data channel includes: The processing unit is configured to determine, based on at least one of the size of the time-frequency resource of the control channel, the size of the frequency domain resource of the second data channel, and the size of the second control information, whether the second control information is carried on the first data channel.

In an implementation, when the processing unit determines that the second control information is carried on the first data channel, the processing unit is configured to indicate the transceiver unit to receive the first data channel.

In an implementation, when the processing unit determines that the second control information is not carried on the first data channel, the processing unit is configured to indicate the transceiver unit to receive the second control information on the second data channel.

In an implementation, third indication information is carried on the control channel. When the processing unit determines that the first data channel exists, the processing unit is configured to determine a modulation and coding scheme MCS of the first data channel based on the third indication information, and the processing unit is configured to determine an MCS of the second data channel based on the second control information. When the processing unit determines that the first data channel does not exist, the processing unit is configured to determine an MCS of the second data channel based on the third indication information.

In an implementation, third indication information is carried on the control channel. When the processing unit determines that the second control information is carried on the first data channel, the processing unit is configured to determine an MCS of the first data channel based on the third indication information, and the processing unit is configured to determine an MCS of the second data channel based on the second control information. When the processing unit determines that the second control information is not carried on the first data channel, the processing unit is configured to determine an MCS of the second data channel based on the third indication information.

In an implementation, first control information is carried on the control channel. The second control information is carried on the first data channel. That indication information of a spatial domain receive parameter of a second data channel is carried on the control channel and/or the first data channel includes: The first control information and/or the second control information include/includes the indication information of the spatial domain receive parameter of the second data channel.

Based on this technical solution, in this application, the indication information of the spatial domain receive parameter of the second data channel may be carried in the control information.

In an implementation, that the first control information and the second control information include the indication information of the spatial domain receive parameter of the second data channel includes: The first control information includes a first field, and the first field indicates identification information of a transmit device corresponding to the communication device. The second control information includes a second field, and the second field indicates the transmit device corresponding to the communication device to transmit indication information of a spatial domain transmit parameter of the second data channel.

Based on this technical solution, in this application, the indication information of the spatial domain receive parameter of the second data channel may be jointly indicated in different fields in different control information, thereby improving flexibility of configuring the indication information of the spatial domain receive parameter of the second data channel.

According to a fourteenth aspect, a communication device is provided, including a transceiver unit. The transceiver unit is configured to receive a control channel and a data channel in a same time unit. The transceiver unit receives the control channel and the data channel based on a same spatial domain receive parameter. Alternatively, the transceiver unit receives both the control channel and the data channel through an omnidirectional receive beam. A target data subchannel is carried on the data channel. The target data subchannel and the control channel are located in different time subunits. Information at a third time-frequency position is a repetition of information about a 1^{st} time subunit of the target data subchannel. A time domain position of the third time-frequency position is a previous time subunit of the target data subchannel. A frequency domain position of the third time-frequency position is the same as a frequency domain resource occupied by the target data subchannel.

In an implementation, fourth indication information is carried on the control channel, and the fourth indication information indicates that the data channel is scheduled by the control channel.

Based on this technical solution, the data channel in this embodiment may be scheduled by the control channel.

In an implementation, a first field is carried on the control channel. The first field indicates the spatial domain receive parameter of the data channel. The device further includes a processing unit. When a value of the first field is equal to a first preset value, the processing unit is configured to indicate the transceiver unit to receive the control channel and the data channel in the same time unit.

In an implementation, indication information of a time resource of the data channel is carried on the control channel. The processing unit is configured to indicate the transceiver unit to receive the control channel and the data channel in the same time unit based on the indication information.

In an implementation, the device is allocated to a first resource pool for communication. The first resource pool includes an x^{th} time subunit to a z^{th} time subunit in each time unit (which should be understood as a time unit included in the first resource pool), where x and z are integers greater than 0, and z is greater than x. The control channel occupies an (x+1)^{th} time subunit to an (x+y)^{th} time subunit in the time unit in which the control channel is located. y is a quantity of time subunits occupied by the control channel. y is an integer greater than or equal to 1. A start time subunit of the target data subchannel is an (x+y+2)^{th} time subunit in the time unit in which the target data subchannel is located. Alternatively, a start time subunit of the target data subchannel is an (x+y+3)^{th} time subunit in the time unit, and an (x+y+1)^{th} time subunit is a time subunit used for a gap.

According to a fifteenth aspect, a communication device is provided, including a transceiver unit. The transceiver unit is configured to periodically receive a control channel, a first data channel, and a second data channel. In an (n+1)^{th} period, the transceiver unit receives the control channel, the first data channel, and the second data channel in a same time unit. The transceiver unit receives the control channel and the first data channel based on a same spatial domain receive parameter. Alternatively, the transceiver unit receives both the control channel and the first data channel through an omnidirectional receive beam. n is an integer greater than or equal to 1.

In this embodiment, the control channel in a same time unit may schedule the first data channel and the second data channel in the same time unit.

In an implementation, in each period, a position of a time domain resource occupied by the first data channel is the same as a position of a time domain resource of the control channel. In each period, a start position of a frequency domain resource occupied by the first data channel is a next frequency domain subunit of an end frequency domain subunit occupied by the control channel, and an end position of the frequency domain resource occupied by the first data channel is the same as an end position of a frequency domain resource occupied by the second data information.

In an implementation, the device further includes a processing unit. In an n^{th} period, indication information of a spatial domain receive parameter of the second data channel in the (n+1)^{th} period is carried on the control channel and/or the first data channel. In the (n+1)^{th} period, the processing unit is configured to determine the spatial domain receive parameter of the second data channel based on the indication information of the spatial domain receive parameter.

In an implementation, in the n^{th} period, indication information of a spatial domain receive parameter of the control channel and indication information of a spatial domain receive parameter of the first data channel in the (n+1)^{th} period are further carried on the control channel and/or the first data channel. In the (n+1)^{th} period, the processing unit is configured to determine the spatial domain receive parameters of the control channel and the first data channel based on the indication information of the spatial domain receive parameters.

In an implementation, before the transceiver unit is configured to periodically receive the control channel, the first data channel, and the second data channel in a same time unit, the transceiver unit is configured to receive a first trigger message. The first trigger message indicates that when a time after the transceiver unit receives the first trigger message is greater than or equal to a first time threshold, the transceiver unit starts to periodically receive the control channel, the first data channel, and the second data channel in the same time unit.

According to a sixteenth aspect, a communication device is provided, including a transceiver unit and a processing unit. The transceiver unit is configured to receive a control channel, a first data channel, and A second data channels, where A is a positive integer, the transceiver unit receives the control channel and the first data channel based on a same spatial domain receive parameter, or the transceiver unit receives both the control channel and the first data channel through an omnidirectional receive beam, and indication information of a spatial domain receive parameter of the A second data channels is carried on the control channel and/or the first data channel. The processing unit is configured to determine the spatial domain receive parameter of the A second data channels based on the indication information of the spatial domain receive parameter. The control channel, the first data channel, and the second data channels occupy a plurality of time units. A start time subunit of a 1^{st} second data channel in the A second data channels is a 2^{nd} time subunit or a 3^{rd} time subunit following an end time domain time subunit of the first data channel. The control channel, the first data channel, and the A second data channels are associated.

In an implementation, frequency domain resource allocation indication information and/or time domain allocation indication information of the A second data channels are/is carried on the control channel, and the method further includes: The processing unit is configured to determine a position of a time-frequency resource of the first data channel based on a position of a time-frequency resource of the control channel and a position of a time-frequency resource of the A second data channels.

In an implementation, a start time domain position of the first data channel is the same as a start time domain position of the control channel. A start position of a frequency domain resource occupied by the first data channel is a next frequency domain subunit of an end frequency domain subunit occupied by the control channel. In a time subunit in which the control channel is not located, a start frequency domain position of the first data channel is the same as a start frequency domain position of the control channel, and an end position of the frequency domain resource occupied by the first data channel is the same as an end position of a frequency domain resource occupied by the A second data channels.

In an implementation, first control information is carried on the control channel. Second control information and first data information are carried on the first data channel. A pieces of second data information are carried on the A second data channels. The first control information includes indication information of a modulation and coding scheme MCS of the first data channel and the indication information of the spatial domain receive parameter of the A second data channels. The second control information includes indication information of an MCS of the A second data channels.

In an implementation, the 1^{st} second data channel in the A second data channels and the control channel are spaced by L time subunits in time domain, and L is an integer greater than or equal to 1.

In an implementation, the device is allocated to a second resource pool for communication. The second resource pool occupies an x^{th} time subunit to a z^{th} time subunit in each time unit, where x and z are integers greater than 0, and z is greater than x. In a time unit in which the 1^{st} second data channel is located, an end time domain time subunit of the 1^{st} second data channel does not exceed a (z-1)^{th} time subunit in the time unit. In a time unit in which a v^{th} second data channel in the A second data channels is located, v is an integer greater than 1, a start time subunit of the v^{th} second data channel is an (x+1)^{th} time subunit, and an end time subunit of the v^{th} second data channel does not exceed a (z-1)^{th} time subunit in the time unit.

In an implementation, a fourth time-frequency position exists before each second data channel. Information at the fourth time-frequency position is a repetition of information about a 1^{st} time subunit of the second data channel. A time domain position of the fourth time-frequency position is a previous time subunit of the second data channel. A frequency domain position of the fourth time-frequency position is the same as a frequency domain position of the second data channel.

This implementation may also be understood as that the information at the fourth time-frequency position is the same as the information about the 1^{st} time subunit of the second data channel.

In an implementation, the device is allocated to the second resource pool for communication. A same spatial domain transmit parameter is used when a transceiver unit of another device in the second resource pool transmits an associated control channel, an associated first data channel, and associated A second data channels. An end time domain time subunit of the first data channel of the another device in the second resource pool and a start time subunit of at least one second data channel associated with the first data channel of the another device are spaced by one time subunit or two time subunits.

According to a seventeenth aspect, a communication device is provided. The device includes a transceiver unit. The transceiver unit is configured to transmit a control channel and a first data channel. The transceiver unit transmits the control channel and the first data channel based on a same spatial domain transmit parameter. Indication information of a spatial domain receive parameter of a second data channel is carried on the control channel and/or the first data channel. The transceiver unit transmits the second data channel based on a spatial domain transmit parameter corresponding to the spatial domain receive parameter.

In an implementation, first control information is carried on the control channel, and the first control information includes frequency domain resource allocation indication information of the second data channel. The frequency domain resource allocation indication information of the second data channel is used by a receive device corresponding to the communication device to determine an end position of a frequency domain resource of the second data channel.

In this application, the end position of the frequency domain resource occupied by the second data channel may be determined based on the frequency domain allocation indication information that is of the second data channel and that is carried on the control channel and/or the first data channel. For example, the frequency domain allocation indication information of the second data channel may include at least a quantity of subchannels occupied by the second data channel.

In an implementation, a position of a time domain resource occupied by the first data channel is the same as a position of a time domain resource of the control channel. A start position of a frequency domain resource occupied by the first data channel is a next frequency domain subunit of an end frequency domain subunit occupied by the control channel, and an end position of the frequency domain resource occupied by the first data channel is the same as the end position of the frequency domain resource occupied by the second data information.

In an implementation, a 1^{st} symbol of the second data channel and a last symbol of the control channel are spaced by (K×M)+1 or (K×M)+2 time subunits in time domain. M is a quantity of time subunits included in one time unit. K is an integer greater than or equal to 1.

In an implementation, the device further includes a processing unit. The processing unit is configured to duplicate a 1^{st} time subunit of the control channel and the first data channel to a previous time subunit of the first data channel.

The implementation may also be understood as that a first time-frequency position exists before the control channel and the first data channel. Information at the first time-frequency position is a repetition of information about a 1^{st} time subunit of the control channel and the first data channel. A time domain position of the first time-frequency position is a previous time subunit of the control channel and the first data channel. A frequency domain position of the first time-frequency position includes a frequency domain resource occupied by the control channel and the frequency domain resource occupied by the first data channel.

In an implementation, the processing unit is configured to duplicate a 1^{st} time subunit of the second data channel to a previous time subunit of the second data channel.

The implementation may also be understood as that a second time-frequency position exists before the second data channel. Information at the second time-frequency position is a repetition of information about a 1^{st} time subunit of the second data channel. A time domain position of the second time-frequency position is a previous time subunit of the second data channel. A frequency domain position of the second time-frequency position is the same as the frequency domain resource occupied by the second data channel.

In an implementation, the device is allocated to a first resource pool for communication. The first resource pool includes an x^{th} time subunit to a z^{th} time subunit in each time unit. The control channel and the first data channel occupy an (x+1)^{th} time subunit to an (x+y)^{th} time subunit in a time unit in which the control channel and the first data channel are located. y is a quantity of time subunits occupied by the control channel. A start time subunit of the second data channel is an (x+y+2)^{th} time subunit in a time unit in which the second data channel is located. Alternatively, a start time subunit of the second data channel is an (x+y+3)^{th} time subunit in a time unit in which the second data channel is located, and in each time unit, an (x+y+1)^{th} time subunit is a time subunit used for a gap.

In an implementation, first control information is carried on the control channel. The second control information is carried on the first data channel. That indication information of a spatial domain receive parameter of a second data channel is carried on the control channel and/or the first data channel includes: The first control information and/or the second control information include/includes the indication information of the spatial domain receive parameter of the second data channel.

Based on this technical solution, in this application, the indication information of the spatial domain receive parameter of the second data channel may be carried in the control information.

In an implementation, that the first control information and the second control information include the indication information of the spatial domain receive parameter of the second data channel includes: The first control information includes a first field, and the first field indicates identification information of the second device. The second control information includes a second field, and the second field indicates the second device to transmit indication information of a spatial domain transmit parameter of the second data channel.

Based on this technical solution, in this application, the indication information of the spatial domain receive parameter of the second data channel may be jointly indicated in different fields in different control information, thereby improving flexibility of configuring the indication information of the spatial domain receive parameter of the second data channel.

According to an eighteenth aspect, a communication device is provided. The device includes a transceiver unit and a processing unit. The transceiver unit is configured to transmit a control channel and a data channel in a same time unit, where a target data subchannel is carried on the data channel, and the target data subchannel and the control channel are located in different time subunits. The processing unit is configured to duplicate a 1^{st} time subunit of the target data subchannel to a previous time subunit of the target data subchannel.

In an implementation, fourth indication information is carried on the control channel, and the fourth indication information indicates that the data channel is scheduled by the control channel.

Based on this technical solution, the data channel in this embodiment may be scheduled by the control channel.

It may also be understood as that a third time-frequency position exists before the target data subchannel. Information at the third time-frequency position is a repetition of information about a 1^{st} time subunit of the target data subchannel. A time domain position of the third time-frequency position is a previous time subunit of the target data subchannel. A frequency domain position of the third time-frequency position is the same as a frequency domain resource occupied by the target data subchannel.

In an implementation, a first field is carried on the control channel. The first field indicates a spatial domain receive parameter of the data channel. The device further includes the processing unit. The processing unit is configured to determine a first preset value. When the transceiver unit transmits the control channel and the data channel in the same time unit, a value of the first field is equal to the first preset value.

In an implementation, indication information of a time resource of the data channel is carried on the control channel, and the indication information of the time resource indicates that the control channel and the data channel are in the same time unit.

In an implementation, the device is allocated to a first resource pool for communication. The first resource pool includes an x^{th} time subunit to a z^{th} time subunit in each time unit, where x and z are integers greater than 0, and z is greater than x. The control channel occupies an (x+1)^{th} time subunit to an (x+y)^{th} time subunit in the time unit in which the control channel is located. y is a quantity of time subunits occupied by the control channel. y is an integer greater than or equal to 1. A start time subunit of the target data subchannel is an (x+y+2)^{th} time subunit in the time unit in which the target data subchannel is located. Alternatively, a start time subunit of the target data subchannel is an (x+y+3)^{th} time subunit in the time unit, and an (x+y+1)^{th} time subunit is a time subunit used for a gap.

According to a nineteenth aspect, a communication device is provided. The device includes a transceiver unit. The transceiver unit is configured to periodically transmit a control channel, a first data channel, and a second data channel. In an (n+1)^{th} period, the transceiver unit transmits the control channel, the first data channel, and the second data channel in a same time unit. The transceiver unit transmits the control channel and the first data channel based on a same spatial domain transmit parameter, and n is an integer greater than or equal to 1.

In this embodiment, the control channel in a same time unit may schedule the first data channel and the second data channel in the same time unit.

In an implementation, in each period, a position of a time domain resource occupied by the first data channel is the same as a position of a time domain resource of the control channel. In each period, a start position of a frequency domain resource occupied by the first data channel is a next frequency domain subunit of an end frequency domain subunit occupied by the control channel, and an end position of the frequency domain resource occupied by the first data channel is the same as an end position of a frequency domain resource occupied by the second data information.

In an implementation, in an n^{th} period, indication information of a spatial domain receive parameter of the second data channel in the (n+1)^{th} period is carried on the control channel and/or the first data channel. In the (n+1)^{th} period, the transceiver unit transmits the second data channel based on a spatial domain transmit parameter corresponding to the spatial domain receive parameter.

In an implementation, in the n^{th} period, indication information of a spatial domain receive parameter of the control channel and indication information of a spatial domain receive parameter of the first data channel in the (n+1)^{th} period are further carried on the control channel and/or the first data channel. In the (n+1)^{th} period, the transceiver unit transmits the control channel and the first data channel based on the spatial domain transmit parameter corresponding to the spatial domain receive parameter.

In an implementation, before the transceiver unit is configured to periodically transmit the control channel, the first data channel, and the second data channel in a same time unit, the transceiver unit is configured to transmit a first trigger message. The first trigger message indicates that when a time after a transmit device corresponding to the device transmits the first trigger message is greater than or equal to a first time threshold, the transceiver unit starts to periodically transmit the control channel, the first data channel, and the second data channel in the same time unit.

According to a twentieth aspect, a communication device is provided. The device includes a transceiver unit. The transceiver unit is configured to transmit a control channel, a first data channel, and A second data channels, where A is a positive integer. The transceiver unit is configured to transmit the control channel, the first data channel, and the A second data channels based on a same spatial domain transmit parameter. Indication information of a spatial domain receive parameter of the A second data channels is carried on the control channel and/or the first data channel. The control channel, the first data channel, and the second data channel occupy a plurality of time units. A start time subunit of a 1^{st} second data channel in the A second data channels is a 2^{nd} time subunit or a 3^{rd} time subunit following an end time domain time subunit of the first data channel. The control channel, the first data channel, and the A second data channels are associated.

In an implementation, the transceiver unit transmits the control channel, the first data channel, and the A second data channels based on the same spatial domain transmit parameter.

In an implementation, frequency domain resource allocation indication information of the A second data channels and/or time domain resource allocation indication information of the A second data channels are carried on the control channel.

In an implementation, a start time domain position of the first data channel is the same as a start time domain position of the control channel. In a time subunit in which the control channel is located, a start position of a frequency domain resource occupied by the first data channel is a next frequency domain subunit of an end frequency domain subunit occupied by the control channel. In a time subunit in which the control channel is not located, a start frequency domain position of the first data channel is the same as a start frequency domain position of the control channel, and an end position of the frequency domain resource occupied by the first data channel is the same as an end position of a frequency domain resource occupied by the A second data channels.

In an implementation, first control information is carried on the control channel. Second control information and first data information are carried on the first data channel. A pieces of second data information are carried on the A second data channels. The first control information includes indication information of a modulation and coding scheme MCS of the first data channel and the indication information of the spatial domain receive parameter of the A second data channels. The second control information includes indication information of an MCS of the A second data channels.

In an implementation, the 1^{st} second data channel in the A second data channels and the control channel are spaced by L time subunits in time domain, and L is an integer greater than or equal to 1.

In an implementation, the device is allocated to a second resource pool for communication. The second resource pool occupies an x^{th} time subunit to a z^{th} time subunit in each time unit, where x and z are integers greater than 0, and z is greater than x. In a time unit in which the 1^{st} second data channel is located, an end time domain time subunit of the 1^{st} second data channel does not exceed a (z-1)^{th} time subunit in the time unit. In a time unit in which a v^{th} second data channel in the A second data channels is located, v is an integer greater than 1, a start time subunit of the v^{th} second data channel is an (x+1)^{th} time subunit, and an end time subunit of the v^{th} second data channel does not exceed a (z-1)^{th} time subunit in the time unit.

In an implementation, the device includes a processing unit. For each second data subchannel, the processing unit is configured to duplicate information about a 1^{st} time subunit of the second data subchannel to a previous time subunit of the second data subchannel.

The implementation may also be understood as that a fourth time-frequency position exists before each second data channel. Information at the fourth time-frequency position is a repetition of information about the 1^{st} time subunit of the second data channel. A time domain position of the fourth time-frequency position is the previous time subunit of the second data channel. A frequency domain position of the fourth time-frequency position is the same as a frequency domain position of the second data channel.

In an implementation, the device is allocated to the second resource pool for communication. A same spatial domain transmit parameter is used when a transmit unit of another device in the second resource pool transmits an associated control channel, an associated first data channel, and associated A second data channels. An end time domain time subunit of the first data channel of the another device in the second resource pool and a start time subunit of at least one second data channel associated with the first data channel of the another device are spaced by one time subunit or two time subunits.

According to a twenty-first aspect, a communication device is provided, including a processor. The processor is coupled to a memory, which may be configured to execute instructions in the memory, to implement the method in any one of the possible implementations of the first aspect to the twelfth aspect. Optionally, the device further includes the memory. Optionally, the device further includes a communication interface, and the processor is coupled to the communication interface.

In an implementation, the device is a terminal device. When the device is a terminal device, the communication interface may be a transceiver or an input/output interface.

In another implementation, the device is a chip disposed in a terminal device. When the device is a chip disposed in a terminal device, the communication interface may be an input/output interface.

In an implementation, the device is a donor node device. When the device is a donor node device, the communication interface may be a transceiver or an input/output interface.

In another implementation, the device is a chip disposed in a donor node. When the device is a chip disposed in the donor node, the communication interface may be an input/output interface. Optionally, the transceiver may be a transceiver circuit. Optionally, the input/output interface may be an input/output circuit.

According to a twenty-second aspect, a processor is provided, including: an input circuit, an output circuit, and a processing circuit. The processing circuit is configured to: receive a signal through the input circuit, and transmit the signal through the output circuit, to enable the processor to perform the method in any one of the possible implementations of the first aspect to the eighth aspect or the ninth aspect to the twelfth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twenty-third aspect, a processing device is provided, including a processor and a memory. The processor is configured to: read instructions stored in the memory, receive a signal via a transceiver, and transmit the signal via a transmitter, to perform the method in any one of the possible implementations of the first aspect to the eighth aspect or the ninth aspect to the twelfth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as transmitting of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the twenty-third aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a twenty-fourth aspect, a computer program product is provided. The computer program product includes a computer program (which may also be referred to as code or instructions). When the computer program is run, a computer is enabled to perform the method in any one of the possible implementations of the first aspect to the eighth aspect or the ninth aspect to the twelfth aspect.

According to a twenty-fifth aspect, a computer-readable medium is provided. The computer-readable medium stores a computer program (which may also be referred to as code or instructions). When the computer program is run on a computer, the computer is enabled to perform the method in any one of the possible implementations of the first aspect to the eighth aspect or the ninth aspect to the twelfth aspect.

According to a twenty-sixth aspect, a chip system is provided, including a processor, configured to invoke a computer program from a memory and run the computer program, so that a device on which the chip system is installed performs the method in any one of the implementations of the first aspect to the eighth aspect or the ninth aspect to the twelfth aspect.

According to a twenty-seventh aspect, a communication system is provided. The communication system includes the device in any one of the thirteenth aspect to the sixteenth aspect and the device in any one of the seventeenth aspect to the twentieth aspect.

### BRIEF DESCRIPTION OF DRAWINGS

FIG. 1 is a schematic diagram of a system scenario to which this application is applicable;
FIG. 2 is a schematic diagram of a sidelink frame structure according to this application;
FIG. 3 is a schematic diagram of cross-slot scheduling of a physical sidelink shared control channel;
FIG. 4 is a schematic flowchart of a communication method 400 according to this application;
FIG. 5 is a schematic flowchart of a communication method 500 according to this application;
FIG. 6 is a schematic diagram of a frame structure according to this application;
FIG. 7 is another schematic diagram of a frame structure according to this application;
FIG. 8 is a schematic flowchart of a communication method 800 according to this application;
FIG. 9 is a schematic diagram of a frame structure according to this application;
FIG. 10 is another schematic diagram of a frame structure according to this application;
FIG. 11 is another schematic diagram of a frame structure according to this application;
FIG. 12 is another schematic diagram of a frame structure according to this application;
FIG. 13 is another schematic diagram of a frame structure according to this application;
FIG. 14 is a schematic block diagram of a communication device according to this application; and
FIG. 15 is a schematic block diagram of a communication device according to this application.

### DESCRIPTION OF EMBODIMENTS

The following describes technical solutions of this application with reference to accompanying drawings.

A wireless communication system mentioned in embodiments of this application includes but is not limited to: a sidelink (sidelink, SL) system, a long term evolution (long term evolution, LTE) system, a long term evolution-advanced (LTE-A) system, an LTE frequency division duplex (frequency division duplex, FDD) system, an LTE time division duplex (time division duplex, TDD) system, a universal mobile telecommunications system (universal mobile telecommunications system, UMTS), a cellular system related to the 3rd generation partnership project (the 3rd generation partnership Project, 3GPP), a 5th generation (the fifth generation, 5G) mobile communication system, and a worldwide interoperability for microwave access (worldwide interoperability for microwave access, WiMAX) communication system, a next-generation communication system (for example, a 6G communication system), a converged system of a plurality of access systems, or an evolved system, three application scenarios including enhanced mobile broadband (enhanced mobile broadband, eMBB), ultra-reliable low-latency communication (ultra reliable low latency communication, URLLC), and massive machine type communication (massive machine type of communication, MTC) of a next-generation 5G mobile communication system, or a new communication system that will emerge in the future.

A terminal device in embodiments of this application may include various access terminals, mobile devices, user terminals, or user devices that have a wireless communication function. For example, the terminal device may be a mobile phone (mobile phone), a tablet computer (Pad), a computer with a wireless transceiver function, a virtual reality (virtual Reality, VR) terminal device, an augmented reality (augmented reality, AR) terminal device, a wireless terminal in industrial control (industrial control), a machine type communication (machine type communication, MTC) terminal, customer premise equipment (customer premise equipment, CPE), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in smart home (smart home), or the like. An application scenario is not limited in embodiments of this application. In this application, the terminal device and a chip that may be disposed in the terminal device are collectively referred to as a terminal device.

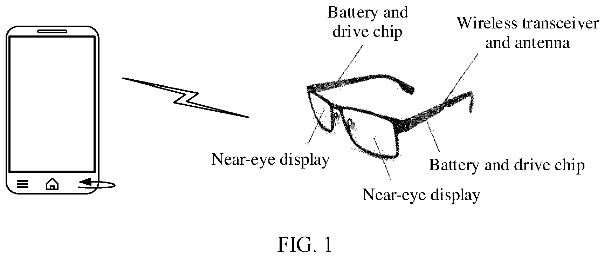

The technical solutions of this application may be applied to a 5G sidelink (sidelink, SL) system or a 5G evolved SL system. In an example, FIG. 1 is a schematic diagram of a communication scenario to which an embodiment of this application may be applied. As shown in FIG. 1, the technical solutions of this application may be applied to a communication scenario between a mobile phone and a near-eye display. For example, the near-eye display may include a near-eye display, a drive chip, a battery, a transceiver, and an antenna. The near-eye display may communicate with the mobile phone via a transceiver and an antenna. The near-eye display may be, for example, a virtual reality (virtual reality, VR) lens, an augmented reality (augmented reality, AR) lens, or a mixed reality (mixed reality, MR) lens. For example, the technical solutions of this application are applicable to a scenario in which VR glasses communicate with the mobile phone. For example, the mobile phone is connected to the VR glasses or a head mounted device, so that content on a screen of the mobile phone can be viewed via the VR device.

For ease of understanding the technical solutions of this application, the following briefly describes related terms in this application.

Beam: In this application, the "beam" may also be understood as "a spatial filtering parameter", "a spatial filter (spatial filter), or "a spatial parameter (spatial parameter)". Abeam for transmitting a signal may usually be referred to as a transmission beam (transmission beam, or Tx beam), or may be referred to as a spatial domain transmit filter (spatial domain transmit filter) or a spatial domain transmit parameter (spatial domain transmit parameter). A beam for receiving a signal may be referred to as a reception beam (reception beam, or Rx beam), or may be referred to as a spatial domain receive filter (spatial domain receive filter) or a spatial domain receive parameter (spatial domain receive parameter).

A technology for forming the beam may be a beamforming technology or another technology. For example, the beamforming technology may be specifically a digital beamforming technology, an analog beamforming technology, a hybrid digital/analog beamforming technology, or the like. The transmit beam may refer to distribution of signal strength formed in different directions in space after a signal is transmitted via an antenna, and the receive beam may refer to distribution of signal strength, in different directions in space, of a radio signal received from an antenna.

Beamforming can be used at both a transmitting end and a receiving end to implement spatial selectivity. An omnidirectional beam is represented as uniform radiation or approximately uniform radiation in all directions in a directivity diagram, that is, generally referred to as non-directional or approximately non-directional. A directional beam is represented as radiation in a specific angle range in a horizontal directivity diagram, that is, generally referred to as directional.

In the new radio (New Radio, NR) protocol, the beam may be, for example, a spatial domain parameter (for example, spatial domain receive parameter or spatial domain transmit parameter). However, it should be understood that this application does not exclude a possibility of defining another term in a future protocol to represent a same or similar meaning.

A beam pairing relationship is a pairing relationship between a transmit beam and a receive beam, that is, a pairing relationship between a spatial domain transmit parameter and a spatial domain receive parameter. A large beamforming gain may be obtained by transmitting a signal between the transmit beam and the receive beam that have the beam pairing relationship.

In an implementation, the transmitting end may transmit a reference signal through beam sweeping, and the receiving end may also receive the reference signal through beam sweeping. Specifically, the transmitting end may form different directional beams in space through beamforming, and may perform polling on a plurality of different directional beams, to transmit a reference signal through the different directional beams, so that power for transmitting the reference signal can reach a maximum value in a direction directed by a transmit beam. The receiving end may also form different directional beams in space in the beamforming manner, and may perform polling on a plurality of different directional beams, to receive a reference signal by using the different directional beams, so that power of receiving the reference signal by the receiving end can reach a maximum value in a direction directed through a receive beam.

The receiving end may perform channel measurement based on the received reference signal by traversing transmit beams and receive beams, and report a measurement result to the transmitting end. For example, the receiving end may report, to the transmitting end, some reference signal resources with large reference signal received power (reference signal received power, RSRP), and for example, report an identifier of the reference signal resource, so that the transmitting end transmits and receives a signal based on a beam pairing relationship with good channel quality during data or signaling transmission.

Listen before talk (listen before talk, LBT): On some unlicensed or unauthorized frequency bands, restricted by laws and regulations of different regions, a radio transmitter first listens to a radio environment of the radio transmitter before starting transmission, and detects whether a channel is idle. If the channel is in a busy state, the radio transmitter performs transmission when the channel is idle, to avoid a channel access conflict and implement channel spectrum sharing. For example, before information (for example, control information or data information) is transmitted, whether a channel is used is first detected. If it is detected that the channel is busy, the information is transmitted after a random period of time.

Resource pool (resource pool): A "resource pool" in this application may also be referred to as a resource set or a resource group. One resource pool may include one or more resources, for example, a vehicle-to-everything (vehicle to everything, V2X) resource. In addition, the resource pool may be preconfigured or preconfigured by the access device for the UE.

In this application, the resource pool may be a resource for sidelink (sidelink) control information and data transmission.

Optionally, a resource in the resource pool includes at least one of a time domain resource, a frequency domain resource, and a time-frequency domain resource.

For example, the time domain resource may be a slot, a symbol, a frame, or a subframe, and the frequency domain resource may be a resource block (resource block, RB), a subcarrier, or the like.

For another example, in a sidelink of NR R16, the frequency domain resource may include a subchannel (subchannel) including a plurality of consecutive RBs. The subchannel may be a minimum frequency domain resource element that can be scheduled, allocated, or occupied on the sidelink (sidelink).

A sidelink is a protocol designed for device-to-device (device-to-device, D2D) direct communication in the 3rd generation partnership project (3rd generation partnership project, 3GPP). A terminal device may directly communicate with another terminal device without forwarding via a network device. Deployment costs of the network device or a load of the deployed network device can be reduced. In addition, because a distance between the directly connected devices is usually short, a channel condition is good, and spectrum utilization efficiency of an entire system can further be effectively improved.

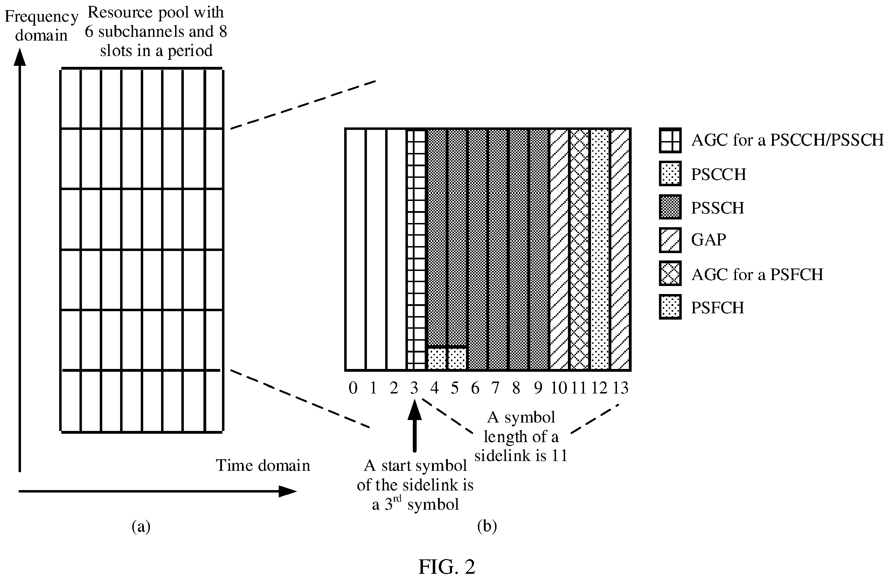

In the new radio Release 16 version, a sidelink terminal is configured with a bandwidth part (bandwidth part, BWP) in which the sidelink terminal operates and a resource pool, to determine a frequency domain resource and a time domain resource that can be used by the sidelink. The time domain resource includes a slot (slot) that can be used by the sidelink terminal and a symbol that can be used in a corresponding slot. As shown in (a) in FIG. 2, six subchannels are allocated to the sidelink terminal in frequency domain, and a resource whose period is eight slots is allocated in time domain. For example, five slots in each period may be used for sidelink transmission. In the sidelink, a subchannel is a minimum granularity on a frequency domain resource when the terminal performs transmission, and a higher layer configures a resource pool. For example, the higher layer may configure a quantity of physical resource blocks (physical resource block, PRB) included in one subchannel in the resource pool. In addition, as shown in (b) in FIG. 2, each slot includes 14 symbols, starting from a symbol 3 (generally determined by a higher-layer parameter: a start sidelink symbol (start SL symbols)) to a symbol 13, and may be used for sidelink transmission.

During sidelink transmission, channels in the sidelink mainly include a physical sidelink control channel (physical sidelink control channel, PSCCH), a physical sidelink shared channel (physical sidelink shared channel, PSSCH), and a physical sidelink feedback channel (physical sidelink feedback channel, PSFCH). Sidelink control information 1 (sidelink control information 1, SCI1) is transmitted on the PSCCH. SCI1 includes information about data scheduling on the associated PSSCH. The PSSCH is used for transmission of sidelink control information 2 (sidelink control information 2, SCI2) and data. The PSFCH is used for transmission of feedback information of a data hybrid automatic repeat request (hybrid automatic repeat request, HARQ).

A 1^{st} symbol (the following sequence number is a sequence number in available symbols configured for the sidelink) transmitted each time on the sidelink is an automatic gain control (automatic gain control, AGC) symbol. The AGC symbol may be used by the receiving end to adjust a parameter of an analog-to-digital converter (analog to digital converter, ADC) of the receiving end based on signal energy or power received on the entire channel, a carrier, a BWP, or a resource pool, so as to subsequently receive a control channel and a data channel. Starting from a 2^{nd} symbol in the available sidelink symbols, the PSCCH may occupy 2 or 3 symbols in time, which may be configured by a higher-layer parameter; and may occupy 10, 12, 15, 20, or 25 physical resource blocks PRBs in frequency domain, which is also configured by a higher-layer parameter.

A start time domain position of the PSSCH is the same as that of the PSCCH. A start frequency domain subchannel of the PSSCH is the same as that of the PSCCH. In each slot, no data is transmitted on a last symbol configured for the sidelink. This symbol is a gap (gap) symbol and is used by the sidelink device to complete conversion between a TX state and an RX state. In addition, a PSFCH is further configured in some slots, and an additional gap symbol and an additional AGC symbol are added to these slots.

Currently, a frame structure of R16 is mainly for a frequency range 1 (frequency range 1, FR1), that is, a low frequency (for example, 700 MHz, 1.8 GHz, 2.1 GHz, or 2.6 GHz). When receiving data, the UE may buffer a signal received in each slot, perform SCI1 detection, and then further demodulate the PSSCH based on a detection result of the SCI. Therefore, all channels can be transmitted and received in a same slot.

However, in a frequency range 2 (frequency range 2, FR2), that is, a high frequency (for example, a millimeter-wave frequency band), such a frame structure can cause a problem. First, on the millimeter-wave frequency band, to overcome large channel fading, a transmit device and/or a receive device need/needs to transmit and/or receive a signal by using a beamforming method. As described above, beamforming may be understood as transmitting/receiving the signal in a specific beam direction.

For the control channel, due to a low SCI modulation and coding scheme (modulation and coding scheme, MCS), in an indoor commercial scenario, it can be assumed that the transmit and receive devices are close to each other, beamforming is performed only at the transmitting end, and omnidirectional beam reception is used at the receiving end. Even if beamforming gains at both sides are not high, a path loss in a sidelink short-distance scenario can be overcome to complete SCI demodulation. However, for the data channel, a high MCS needs to be used for data transmission. Therefore, both the transmitting end and the receiving end need to perform beamforming. For a receive device, when there are a plurality of transmit devices or a transmit device has a plurality of available transmit beams, if the receiving end cannot adjust a receive beam of the receiving end in a timely manner to a beam direction corresponding to the transmit beam, receiving of the data channel is affected.

A similar problem also exists on a millimeter-wave frequency band of a cellular network. There may be a plurality of available transmit and receive beams between a base station and a terminal. When a physical downlink shared channel (physical downlink shared channel, PDSCH) and downlink control information (downlink control information, DCI) are spaced by an interval greater than time duration for quasi co-location (time duration for quasi co-location), a beam of the PDSCH may be determined based on indication information in the downlink control information (downlink control information, DCI). The time duration for quasi co-location may be understood as a time required by a receiver to perform DCI demodulation and decoding and adjust a receive beam based on a DCI demodulation and decoding result. When a subcarrier spacing is configured as 120 kHz, the time duration for quasi co-location is usually 14 symbols or 28 symbols, that is, one or two slots. When the PDSCH and the DCI are spaced by an interval less than the time duration for quasi co-location, the PDSCH may be received through some previously used default beams. However, in the sidelink, one device may need to communicate with a plurality of devices, and it is difficult to predict which device the device needs to communicate with at a specific moment. Therefore, it is difficult to receive the data channel through a default beam. If an existing frame structure of the sidelink is still used, the receiving end does not have sufficient time to demodulate the SCI to determine a receive beam of the receiving end, and data receiving performance is affected.

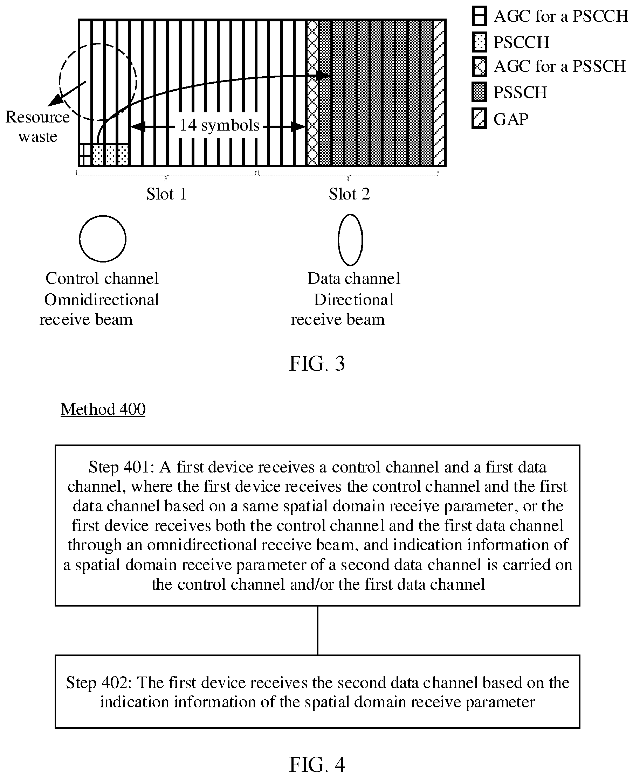

In this application, a cross-slot scheduling solution is provided to resolve this problem. FIG. 3 shows a frame structure according to this application. In an example, as shown in FIG. 3, a transmitting end may first transmit a PSCCH and a corresponding AGC symbol on an x^{th} symbol to an (x+y)^{th} symbol in a 1^{st} slot, and then transmit, based on a capability of a receiving end, a corresponding PSSCH, that is, a data channel and a corresponding AGC symbol, on an (x+y+1)^{th} symbol to a (z-1)^{th} symbol in (1+N)^{th} slots (which may also be understood as cross-slot, where N is an integer greater than or equal to 1). In addition, same as in the current frame structure, a start frequency domain position of the PSCCH is the same as that of the PSSCH. x and z are integers greater than 0, and z is greater than x. y is a quantity of time subunits occupied by a control channel, and y is an integer greater than or equal to 1.

The receiving end may first perform blind detection of SCI1 on first several symbols in each slot (for example, the receiving end may receive the SCI1 control information through an omnidirectional receive beam). The SCI1 includes indication information of a data channel beam.

If the receiving end successfully detects the SCI1, after completing demodulation and decoding on the SCI1, the receiving end may adjust a receive beam of the receiving end (for example, may receive a data channel through a directional receive beam), and then demodulate the data channel at a corresponding position. Therefore, data receiving performance can be improved.

In this application, the PSCCH and the PSSCH use a time division multiplexing (time division multiplexing, TDM) manner. When the PSSCH occupies a plurality of subchannels or the PSCCH occupies a small quantity of PRBs, a large quantity of PRB resources in PSCCH symbols are wasted. In addition, because the PSCCH and the PSSCH use different receive beams, signal-to-noise ratios (signal-to-noise ratio, SNR) of the PSCCH and the PSSCH are different, and MCSs that can be used are different. Therefore, a remaining resource of symbols on which the PSCCH is located cannot be directly allocated to the PSSCH. In addition, the resource cannot be used by another device. As a result, a serious waste of resources is caused. Therefore, in the following embodiment, the frame structure is further optimized for this problem.

FIG. 4 is a flowchart of a communication method 400 according to this application. The method in FIG. 4 includes the following steps.

Step 401: A first device receives a control channel and a first data channel.

In this embodiment, the first device receives the control channel and the first data channel based on a same spatial domain receive parameter, the first device receives both the control channel and the first data channel through an omnidirectional receive beam, or the first device may receive the control channel and the first data channel through a default beam.

In this embodiment, in an implementation, indication information of a spatial domain receive parameter of a second data channel may be carried on the control channel. For example, first control information is carried on the control channel, and the control information may include the indication information of the spatial domain receive parameter of the second data channel.

In another implementation, the indication information of the spatial domain receive parameter of the second data channel may be carried on the first data channel. For example, second control information is carried on the first data channel, and the second control information may include the indication information of the spatial domain receive parameter of the second data channel.

In still another implementation, some indication information of the spatial domain receive parameter of the second data channel is carried on both the control channel and the first data channel. In an example, the first control information is carried on the control channel. The control information includes a first field, and the first field indicates identification information of a transmit device corresponding to the first device. The second control information is carried on the first data channel. The second control information includes a second field, and the second field indicates the transmit device corresponding to the first device to transmit indication information of a spatial domain transmit parameter of the second data channel.

It should be noted that, in the following embodiment of this application, that the first device receives the indication information of the spatial domain receive parameter of the second data channel may also be understood as that the first device receives the indication information of the spatial domain transmit parameter of the second data channel (in this case, it may be understood as that a second device transmits the indication information of the spatial domain transmit parameter of the second data channel). For example, the first device may obtain information about a plurality of beam pairs based on a previous training result, that is, when the second device uses a transmit beam, through which receive beam the first device can obtain high signal quality. Correspondingly, if the first device receives the indication information of the spatial domain transmit parameter of the second data channel transmitted by the second device, the first device can also determine the spatial domain receive parameter of the second data channel based on a history beam training result. Therefore, a form of the indication information of the spatial domain receive parameter of the second data channel may also be the indication information of the spatial domain transmit parameter of the second data channel transmitted by the second device. Alternatively, in other words, "the spatial domain transmit parameter of the second data channel is carried on the control channel and/or the first data channel" may also be understood as an implementation of "the spatial domain receive parameter of the second data channel is carried on the control channel and/or the first data channel".

In this embodiment, after demodulating (which may also be understood as decoding) the control channel and/or the first data channel, the first device may determine a beam for receiving the second data channel. Therefore, when the second data channel is received subsequently, a specific beam may be used to receive the second data channel, thereby improving a signal-to-noise ratio of the second data channel, and implementing a high data transmission rate of the second data channel.

In this embodiment, a position of a time domain resource occupied by the first data channel is the same as a position of a time domain resource of the control channel. A start position of a frequency domain resource occupied by the first data channel is a next frequency domain subunit of an end frequency domain subunit occupied by the control channel, and an end position of the frequency domain resource occupied by the first data channel is the same as an end position of a frequency domain resource occupied by the second data channel.

In this embodiment, the first device may receive the control channel through a default wide beam or an omnidirectional beam, so that the first device can receive control information of one or more devices in a plurality of devices at any time. The first device receives the control channel and the first data channel based on the same spatial domain receive parameter or through the omnidirectional receive beam, so that the first device can receive some data information when receiving the control information, thereby effectively using remaining resources of a time subunit in which the control channel is located, and improving resource utilization.

It may also be understood as that, in this embodiment, frequency division multiplexing may be performed on the first data channel and the control channel.

Step 402: The first device receives the second data channel based on the indication information of the spatial domain receive parameter.

For example, the first device may adjust a direction of a receive beam of the first device based on the indication information of the spatial domain receive parameter, and receive the second data channel in a specific direction.

According to the communication method provided in this application, the first device can determine a receive beam of the second data channel based on the related indication information in the control channel, thereby improving the signal-to-noise ratio for receiving the second data channel.

In an implementation, the control channel may further include the first control information, and the first control information includes frequency domain resource allocation indication information of the second data channel.

Optionally, step 403 is further included. The first device may determine the end position of the frequency domain resource of the second data channel based on the frequency domain resource allocation indication information.

In an example, a start frequency domain position of the second data channel is the same as a start frequency domain position of the control channel, and an end frequency domain position of the second data channel may be determined based on the frequency domain allocation indication information of the second data channel carried on the control channel and/or the first data channel. For example, the frequency domain allocation indication information of the second data channel may include at least a quantity of subchannels occupied by the second data channel.

In this embodiment, the second data channel and the control channel are spaced by (K×M)+1 or (K×M)+2 time subunits in time domain. M is a quantity of time subunits included in one time unit. K is an integer greater than or equal to 1.

It may also be understood as that, in this embodiment, time division multiplexing may be performed on the second data channel and the control channel, or time division multiplexing may be performed on the second data channel and the first data channel.

In this application, the time unit may be, for example, a time resource element such as a slot, a subframe, or a frame, and the time subunit may be, for example, a symbol, a slot, or a subframe. For example, when the time unit is a frame, the time subunit may be a subframe, a slot, or a symbol. For another example, when the time unit is a subframe, the time subunit may be a slot, or may be a symbol. For still another example, when the time unit is a slot, the time subunit may be a symbol.

Based on this technical solution, in this application, the first device can determine, based on a detection result of the control channel in a previous time unit, whether there is data transmission in a current time unit. When determining that there is no data transmission in a current slot, the first device may stop receiving a sidelink in a time subunit other than the control channel, thereby achieving specific energy-saving gains.

Optionally, step 404 is further included. The first device determines whether the first data channel exists, or the first device determines whether the second control information is carried on the first data channel.

Specifically, a method for the first device to determine that the first data channel exists may be as follows.

For example, second indication information is further carried on the control channel. The second indication information indicates whether the first data channel exists. The first device determines, based on the second indication information, whether the first data channel exists.

For another example, the first device determines, based on at least one of a size of a time-frequency resource of the control channel, a size of the frequency domain resource of the second data channel, and a size of the second control information, whether the first data channel exists.

In another implementation, the first device determines whether the second control information is carried on the first data channel, so as to determine whether the first data channel exists.

For example, second indication information is further carried on the control channel. The second indication information indicates whether the second control information is carried on the first data channel. The first device determines, based on the second indication information, whether the second control information is carried on the first data channel.

For another example, the first device determines, based on at least one of a size of a time-frequency resource of the control channel, a size of the frequency domain resource of the second data channel, and a size of the second control information, whether the second control information is carried on the first data channel.

In this application, that the first device determines whether the second control information exists on the first data channel and that the first device determines whether the first data channel exists may be understood as equivalent. In other words, that the first device determines whether the first data channel exists may also be expressed as that the first device determines whether the second control information is carried on the first data channel. In other words, if the first device determines that the second control information is not carried on the first data channel, the first device may determine that the first data channel does not exist either.

When the first device determines that the first data channel does not exist, the first device may receive the second control information on the second data channel. Alternatively, when the first device determines that the second control information is not carried on the first data channel, the first device may receive the second control information on the second data channel.

In an implementation, third indication information is carried on the control channel. When the first device determines that the first data channel exists, the first device determines an MCS of the first data channel based on the third indication information, the first device determines to receive the second control information on the first data channel, and the first device determines an MCS of the second data channel based on the second control information. When the first device determines that the first data channel does not exist, the first device determines an MCS of the second data channel based on an indication of the third indication information.

In an implementation, third indication information is carried on the control channel. When the first device determines that the second control information is carried on the first data channel, the first device determines an MCS of the first data channel based on the third indication information, and the first device determines an MCS of the second data channel based on the second control information. When the first device determines that the second control information is not carried on the first data channel, the first device determines an MCS of the second data channel based on the third indication information.

In the following specific embodiments of this application, a PSCCH is used as an example to describe a sidelink control channel, a PSSCH is used as an example to describe a sidelink data channel, a slot is used as an example to describe a time unit in a 5G system, a symbol is used as an example to describe a time subunit, a subchannel is used as an example to describe a frequency domain unit, and a physical resource block (physical resource block, PRB) is used as an example to describe a frequency domain subunit in a 5G system.

It should be noted that, in the technical solutions in the following embodiments of this application, some technical content is similar in different embodiments. For brevity, similar technical content is not repeatedly described in the embodiments. For details, refer to the descriptions in the foregoing embodiments. Therefore, same technical effect implemented based on the technical solutions of a same part are not repeatedly described either, and other different beneficial effect implemented based on different technical solutions in different embodiments are mainly described.

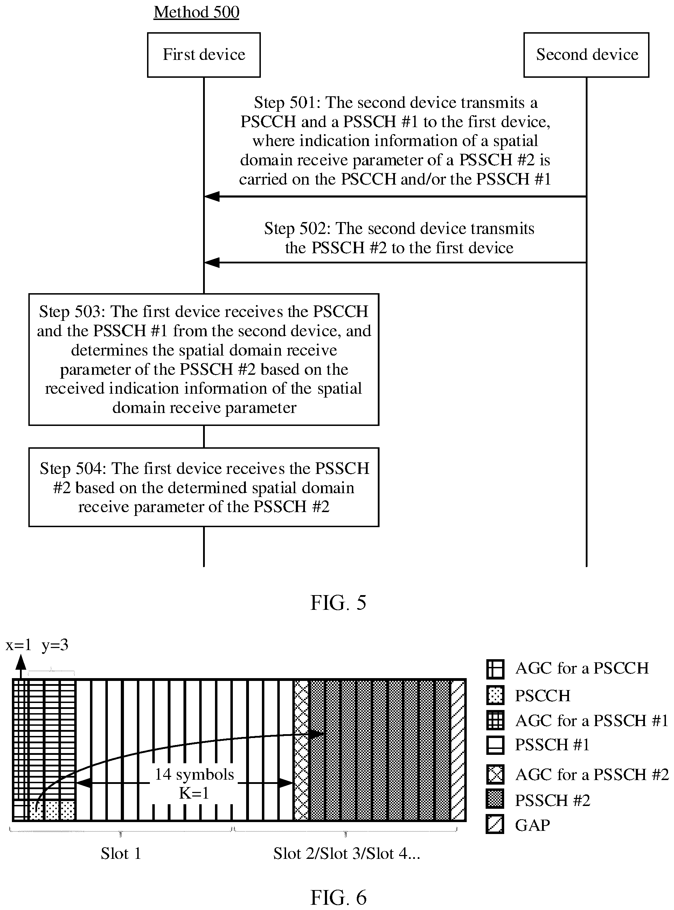

FIG. 5 is a flowchart of a communication method 500 according to a specific embodiment of this application. The method in FIG. 5 includes the following steps.

Step 501: A second device transmits a PSCCH (an example of a control channel) and a PSSCH #1 (an example of a first data channel) to a first device. The PSCCH and/or the PSSCH #1 include/includes indication information of a spatial domain receive parameter of a PSSCH #2 (an example of a second data channel).

As shown in FIG. 6, in this embodiment, the PSSCH #1 is additionally added to a symbol on which the PSCCH is located. It may also be understood as that, in this embodiment, a data channel may have two parts. A first part of the data channel is a remaining resource of a symbol on which the control channel is located, and a second part of the data channel is a resource cross-slot scheduled by the control channel.

In this embodiment, the second device transmits the PSCCH and the PSSCH #1 based on a same spatial domain transmit parameter. It may also be understood as that, in this embodiment, the second device transmits the PSCCH and the PSSCH #1 through a same directional beam.

In this embodiment, a time unit corresponds to a slot, a time subunit corresponds to a symbol, a frequency domain unit corresponds to a subchannel, and a frequency domain subunit corresponds to a PRB.

In this embodiment, the first device and the second device are allocated to a sidelink resource pool, and the resource pool may occupy an x^{th} symbol to a z^{th} symbol in each slot. x and z are integers greater than or equal to 0, and z is greater than x. The second device transmits the PSCCH and the PSSCH #1 on an (x+1)^{th} symbol to an (x+y)^{th} symbol in a slot (which should be understood as a slot included in the resource pool). y (y is an integer greater than or equal to 1) is a quantity of symbols occupied by the PSCCH configured in the resource pool, and may be configured based on a higher-layer parameter. A start frequency domain position of the PSCCH is a start frequency domain position of a subchannel, and division of the subchannel may be configured based on a higher-layer parameter. A quantity of PRBs occupied by the PSCCH may also be configured based on a higher-layer parameter. A start frequency domain PRB of the PSSCH #1 is a PRB above the PSCCH (which may also be understood as that a start frequency domain position of the PSSCH #1 is a next frequency domain subunit of an end frequency domain subunit occupied by the PSCCH). An end frequency domain PRB of the PSSCH #1 is the same as an end frequency domain PRB of the PSSCH #2 (which may also be understood as that an end position of a frequency domain resource occupied by the PSSCH #1 is the same as an end position of a frequency domain resource occupied by the PSSCH #2, and the end position of the frequency domain resource occupied by the PSSCH #2 may be determined based on frequency domain allocation indication information of the PSSCH #2 carried on the PSCCH and/or the PSSCH #1, for example, the frequency domain allocation indication information of the PSSCH #2 may include at least a quantity of subchannels occupied by the PSSCH #2). The second device duplicates a 1^{st} symbol of the PSCCH and the PSSCH #1 to a previous symbol, that is, the x^{th} symbol in the slot is an AGC symbol (which may also be understood as that the second device duplicates a 1 ^{st} time subunit of the control channel and the first data channel to a previous time subunit of the first data channel, or that information at a first time-frequency position is a repetition of information about the 1^{st} time subunit of the control channel and the first data channel, a time domain position of the first time-frequency position is the previous time subunit of the control channel and the first data channel, and a frequency domain position of the first time-frequency position includes frequency domain resources occupied by the control channel and the first data channel, and which may also be understood as that the information at the first time-frequency position is the same as information about the 1^{st} time subunit of the control channel and the first data channel). From a perspective of a system, a 1^{st} symbol that can be used for sidelink communication in each slot is an AGC symbol, that is, an x^{th} symbol is the AGC symbol. In other words, any device in the resource pool needs to perform AGC training on the symbol when receiving sidelink information. As described above, the AGC symbol may be used by the receiving end to adjust an ADC parameter of the receiving end based on received power, and is used for subsequent signal reception.

For example, as shown in FIG. 6, it may be assumed that the second device transmits the PSCCH and the PSSCH #1 on a 2^{nd} symbol to a 4^{th} symbol (that is, x=1 and y=3) in a slot, and frequency division multiplexing is performed on the PSCCH and the PSSCH #1. The 1^{st} symbol in the slot is a corresponding AGC symbol.

In an implementation, SCI1 (an example of first control information) is carried on the PSCCH, and SCI2 (an example of second control information) and first data information are carried on the PSSCH #1. The first data information may be understood as a transmission block (transmission block, TB). The SCI1 includes the frequency domain allocation indication information of the PSSCH #2 associated with the SCI1, and the SCI1 and/or the SCI2 may include the indication information of the spatial domain receive parameter of the PSSCH #2.

The indication information of the spatial domain receive parameter of the PSSCH #2 may be indicated in the following three manners.

Manner 1: A source identifier (source identifier (ID)), for example, identification information (that is, an ID of the second device) of the second device, indicates information about the spatial domain receive parameter of the PSSCH #2. In an example, if only one beam pair is maintained between each transmission pair, the first device can determine, in a previous beam training process, a receive beam that should be used to receive information from other devices. After obtaining a source ID in SCI, the first device can determine information transmitted by the second device, so as to determine a beam to be used to receive the PSSCH #2 subsequently transmitted by the second device.

The source ID in the manner 1 may be understood as a field, and may exist in the SCI1, or may exist in the SCI2. This is not limited.

Manner 2: A source identifier (source ID) and a transmission configuration indicator (transmission configuration indicator, TCI) jointly indicate information about the spatial domain receive parameter of the PSSCH #2. If a plurality of beam pairs are maintained between each transmission pair, the first device determines a plurality of candidate beam pairs with each device in an early beam training process. When the second device uses different transmit beams, the first device also needs to use different receive beams. The TCI is a manner used to indicate a receive beam in a cellular network. The TCI is usually associated with a reference signal. The first device performs previous beam training. When the second device uses a same transmit beam used by the second device to transmit a reference signal associated with the TCI, the first device can determine a receive beam corresponding to the first device. The manner of using the source ID+TCI may be understood as that the second device transmits an identity of the second device and indicates a transmit beam used by the second device, so that the first device can determine a beam to be used to receive the PSSCH #2 subsequently transmitted by the second device.

In an example, the source ID may be understood as a field (for example, a first field), and may exist in the SCI1, and the TCI may be understood as a field (for example, a second field), and may exist in the SCI2. In this case, the indication information of the spatial domain receive parameter of the PSSCH #2 may be jointly indicated in different fields in different control information, thereby improving flexibility of configuring the indication information of the spatial domain receive parameter of the PSSCH #2.

Manner 3: An identifier of a receive beam of the first device is directly indicated. The first device and the second device may determine, in a previous beam training process, which receive beam or receive beams of the first device have good receiving performance, and negotiate and indicate, according to a specific rule, identifiers corresponding to these beams.

For example, an identifier of a receive beam (that is, for receiving the PSSCH #2) of the first device may be directly indicated in the SCI1 or the SCI2.

In an implementation, the SCI1 and/or the SCI2 may include indication information of a start time domain position (for example, an offset (offset)) of the PSSCH #2. The offset may indicate an interval between the PSCCH and the PSSCH #2. For example, if the offset may indicate K slots (K is an integer greater than or equal to 1), it indicates that the PSSCH #2 is located in a K^{th} slot following the PSCCH.

In another implementation, the interval between the PSSCH #2 and the PSCCH is determined by the first device and the second device through negotiation.

In still another implementation, the interval between the PSSCH #2 and the PSCCH is configured by the resource pool in which the first device and the second device are located, that is, intervals between PSCCHs and PSSCHs #2 of all devices in the resource pool are fixed.

In an implementation, if it is considered that the indication information of the spatial domain receive parameter and frequency domain resource allocation indication information of the PSSCH #2 are carried in the SCI1, when the PSSCH #2 occupies a small quantity of subchannels or the PSCCH occupies a large quantity of PRBs, the first device may not transmit the PSSCH #1, or no information is carried on the PSSCH #1. In this embodiment, the SCI2 may be preferentially carried on the PSSCH #1, and then data is carried. For example, during a transmission, the PSSCH #2 occupies only one subchannel, and the PSCCH occupies a large quantity of PRBs. In this case, the PSSCH #1 may be insufficient to carry the SCI2, that is, the frame structure is rolled back to the frame structure without the PSSCH #1 in FIG. 3. In an implementation, the SCI1 may include second indication information, and the second indication information indicates whether the second device transmits the PSSCH #1 or whether information is carried on the PSSCH #1. Because it is considered that the SCI2 is preferentially carried on the PSSCH #1, whether information is carried on the PSSCH #2 may also be understood as whether the SCI2 is carried on the PSSCH #2, that is, when the SCI2 is not carried on the PSSCH #1, no other data information is carried.

In an implementation, the SCI1 may include third indication information. When the first device determines that the PSSCH #1 exists, the first device determines an MCS of the PSSCH #1 based on the third indication information, and the first device determines to receive the SCI2 on the PSSCH #1. The first device determines an MCS of the PSSCH #2 based on the SCI2. When the first device determines that the PSSCH #1 does not exist, the first device determines an MCS of the PSSCH #2 based on an indication of the third indication information.

In another implementation, the SCI1 may include third indication information. When the first device determines that the SCI2 is carried on the PSSCH #1, the first device determines an MCS of the PSSCH #1 based on the third indication information, and the first device determines an MCS of the PSSCH #2 based on the SCI2. When the first device determines that the SCI1 is not carried on the PSSCH #1, the first device determines an MCS of the PSSCH #2 based on the third indication information.

In an implementation, the SCI1 and/or the SCI2 may include first indication information, and the first indication information indicates whether the first data information is carried on the PSSCH #1. The first device determines, based on the first indication information, whether to receive the first data information on the PSSCH #1.

If the first device determines that the first data information exists on the first data channel, the first device may determine to decode both the first data information (which may also be understood as a first transport block (transport block, TB)) received on the PSSCH #1 and second data information (which may also be understood as a second transport block) received on the PSSCH #2. If the first device determines that the first data information does not exist on the PSSCH #1, the first device may determine to separately decode data information received on the PSSCH #2. In this embodiment, the first device determines whether data information exists on the PSSCH #1, so that the first device may determine a manner of subsequently decoding the data information, thereby improving accuracy of data transmission.

That the second device transmits the PSCCH and the PSSCH #1 based on the same spatial domain transmit parameter may also be understood as that the second device transmits the PSCCH and the PSSCH #1 through a same transmit beam, and the second device may determine the transmit beam based on a previous beam training result.

Step 502: The second device transmits the PSSCH #2 to the first device.

In this embodiment, the PSSCH #2 is located in a K^{th} slot following the PSCCH, and the PSSCH #2 occupies an (x+y+2)^{th} symbol to a (z-1)^{th} symbol or an (x+y+3)^{th} symbol to a (z-1)^{th} symbol in the slot. It may also be understood as a last symbol of the PSCCH and a 1^{st} symbol of the PSSCH #2 are spaced by (K×M)+1 symbols or (K×M)+2 symbols. M is a quantity of symbols included in one slot, and K is an integer greater than or equal to 1. In other words, in this embodiment, cross-slot scheduling may be implemented.

In an example, as described above, the first device may first determine a position of the slot of the PSSCH #2 based on indication information (for example, an offset (offset)) that is of a start time domain position of the PSSCH #2 and that is included in the SCI1 and/or the SCI2. For example, if the offset indicates that the PSCCH and the PSSCH #2 are spaced by K slots (K is an integer greater than or equal to 1), it indicates that the PSSCH #2 is located in the K^{th} slot following the PSCCH. Then, a start position of the symbols occupied by the PSSCH #2 is determined based on the (K×M)+1 symbols or (K×M)+2 symbols by which the last symbol of the PSCCH and the 1^{st} symbol of the PSSCH #2 are spaced. For example, if the PSCCH and the PSSCH #2 are spaced by (K×M)+1 symbols (that is, there is an additional AGC symbol before the PSSCH #2), the first device may determine that the PSSCH #2 starts to occupy from an (x+y+1+1)^{th} symbol. For another example, if the PSCCH and the PSSCH #2 are spaced by (K×M)+2 symbols (that is, there is an additional AGC symbol and a gap symbol before the PSSCH #2), the first device may determine that the PSSCH #2 starts to occupy from an (x+y+1+2)^{th} symbol.

Configuration 1: When a higher layer configures that the PSSCH #2 occupies the (x+y+2)^{th} symbol to the (z-1)^{th} symbol in the slot, a previous symbol of the PSSCH #2 (that is, an (x+y+1)^{th} symbol in the slot) is an AGC symbol, the second device duplicates the 1 ^{st} symbol of the PSSCH #2 to the AGC symbol (which may also be understood as that the second device duplicates a 1^{st} time subunit of the second data channel to a previous time subunit of the second data channel, or information at a second time-frequency position is a repetition of information about the 1^{st} time subunit of the second data channel, a time domain position of the second time-frequency position is the previous time subunit of the second data channel, and a frequency domain position of the second time-frequency position is the same as the frequency domain resource occupied by the second data channel, or which may be understood as that the information at the second time-frequency position is the same as the information about the 1^{st} time subunit of the second data channel). A z^{th} symbol in the slot is a symbol used for a gap, that is, a gap symbol, and is used by a device to perform receive/transmit conversion between receiving (or transmitting) the PSSCH #2 and transmitting (or receiving) the PSCCH and the PSSCH #1. It may be understood that, from a perspective of a system layer, an (x+y+1)^{th} symbol in each slot is an AGC symbol, and a z^{th} symbol in each slot is a gap symbol.

In an example, when x=1, y=3, and z=14, as shown in FIG. 6, the PSSCH #2 may start to occupy from an (x+2+y)^{th} symbol (namely, a 6^{th} symbol) in the slot. In addition, the (x+y+1)^{th} symbol in each slot, for example, a 5^{th} symbol, may be an AGC symbol. A last symbol in each slot is a gap symbol.

Configuration 2: When a higher layer configures that the PSSCH #2 occupies the (x+y+3)^{th} symbol to the (z-1)^{th} symbol in the slot, a previous symbol of the PSSCH #2 (that is, the (x+y+2)^{th} symbol in the slot) is an AGC symbol, the (z-1)^{th} symbol and the (x+y+1)^{th} symbol in the slot are symbols used for gaps, and the (x+y+1)th symbol is used by a device to perform receive/transmit conversion between receiving (or transmitting) the PSCCH and the PSSCH #1 and transmitting (or receiving) the PSSCH #2. It may be understood that, from a perspective of a system layer, an (x+y+2)^{th} symbol in each slot is an AGC symbol, and an (x+y+1)^{th} symbol and a z^{th} symbol in each slot are gap symbols.

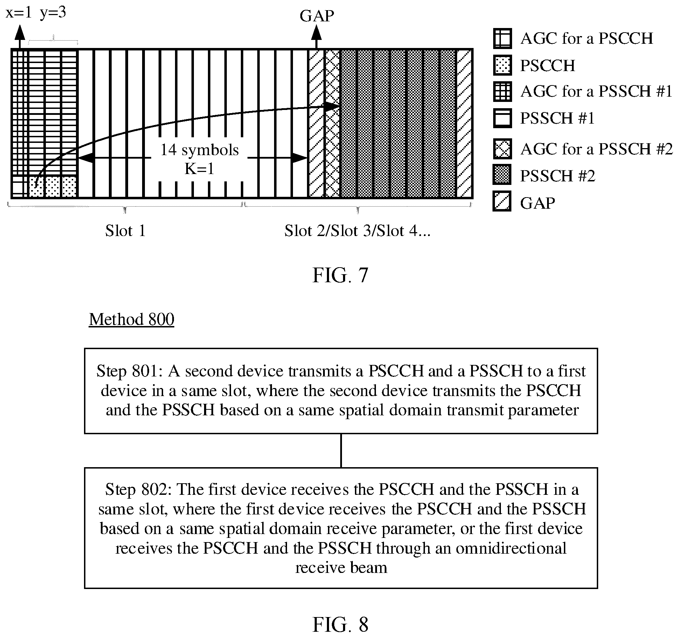

In an example, when x=1, y=3, and z=14, as shown in FIG. 7, the PSSCH #2 may start to occupy from an (x+3+y)^{th} symbol (namely, a 7^{th} symbol) in the slot. In addition, content on the (x+3+y)^{th} symbol (that is, the 7^{th} symbol) is duplicated to a previous symbol, to form the AGC symbol. In FIG. 7, nothing is transmitted on the (x+y+1)^{th} symbol, and the (x+y+1)^{th} symbol is used as a gap symbol. The gap symbol is used by a device to perform receive/transmit conversion.

In this application, whether the configuration 1 or the configuration 2 is used may be determined based on information in the resource pool uniformly configured by the higher layer.

Optionally, when a resource of the PSFCH is configured in the slot in which the PSSCH #2 is located, on the foregoing basis, it needs to be additionally ensured that the PSSCH #2 does not occupy a symbol on which the PSFCH is located and two previous symbols of the PSFCH. One of the two symbols is used for a gap, and the other is used to receive AGC training of the PSFCH.

In an implementation, the PSSCH #2 includes the second data information, and the data information may be understood as one TB.

In an implementation, when the SCI2 is not carried on the PSSCH #1, the PSSCH #2 may include the SCI2.

In an implementation, the second device may determine, based on a previous beam training result, a beam for transmitting the PSSCH #2.

In an implementation, the second device transmits the PSSCH #2, the PSCCH, and the PSSCH #1 based on a same spatial domain transmit parameter, that is, through a same transmit beam.

Step 503: The first device receives the PSCCH and the PSSCH #1 from the second device, and the first device determines, based on the indication information of the spatial domain receive parameter of the PSSCH #2 in the received PSCCH and/or the PSSCH #1, the spatial domain receive parameter for receiving the PSSCH #2.

In this embodiment, the first device may receive the PSCCH and the PSSCH #1 through a default beam or an omnidirectional beam. Alternatively, when the first device receives the PSCCH and the PSSCH #1 through the default beam, it may be understood as that the first device receives the PSCCH and the PSSCH #1 based on the same spatial domain receive parameter.

In an implementation, the first device receives a signal on the x^{th} symbol in the slot through a default beam or an omnidirectional beam, performs AGC adjustment based on the received signal, and then receives the (x+1)^{th} symbol to the (x+y)^{th} symbol based on adjusted AGC. Specifically, the PSCCH and the corresponding SCI1 are detected on at least one subchannel on the (x+1)^{th} symbol to the (x+y)^{th} symbol in the slot. The SCI1 includes frequency domain allocation indication information of the PSSCH #2, and the frequency domain allocation indication information includes at least a quantity of subchannels occupied by the PSSCH #2, so as to determine a frequency domain position of the PSSCH #2. If the SCI1 is detected, a time-frequency position of the PSSCH #1 may be further determined. A symbol occupied by the PSSCH #1 is the same as that of the PSCCH, and a start frequency domain PRB of the PSSCH #1 is a PRB above an end PRB of the PSCCH. An end frequency domain position of the PSSCH #1 is the same as an end frequency domain position of the PSSCH #2.

When the PSCCH or the PSSCH #1 transmitted by the second device in the step 501 includes indication information of a time domain position of the PSSCH #2, the first device determines the time domain position of the PSSCH #2 based on the indication information of the time domain position.

For example, the SCI1 in the PSCCH includes a third field, and the SCI2 in the PSSCH #1 includes a fourth field. The third field and the fourth field respectively indicate some information about the time domain position of the PSSCH #2. In this case, the first device may determine the time domain position of the PSSCH #2 based on both indication information of the third field and indication information of the fourth field.

Optionally, a time interval between the PSSCH #2 and the PSCCH is determined by the first device and the second device through negotiation or may be determined by information in a resource pool uniformly configured by a higher layer. The first device determines the time domain position of the PSSCH #2 based on the interval and the time domain position of the PSCCH.

In an implementation, the SCI1 and/or the SCI2 may include the indication information of the spatial domain receive parameter of the PSSCH #2, and the first device further determines the spatial domain receive parameter of the PSSCH #2 based on the indication information.

In an implementation, in this embodiment, the first device may determine whether the PSSCH #1 exists, or determine whether the SCI2 is carried on the PSSCH #1.

When the SCI1 transmitted by the first device in the step 501 includes the second indication information, the first device may determine, based on the second indication information, whether the PSSCH #1 exists or whether the SCI2 is carried on the PSSCH #1.

Optionally, the first device may determine, based on at least one of a size of a time-frequency resource of the PSCCH, a size of a frequency domain resource of the PSSCH #2, a size of the SCI1, and a size of the SCI2, whether the PSSCH #1 exists or whether the SCI2 is carried on the PSSCH #1. Specifically, when the SCI1 indicates that the frequency domain resource of the PSSCH #2 includes only one subchannel, and a frequency domain resource occupied by the PSCCH in the resource pool is greater than a threshold, the first device may determine, based on this, that the SCI2 is not carried on the PSSCH #1, or that the PSSCH #1 does not exist.

In an implementation, the SCI1 includes the third indication information. When the first device determines that the PSSCH #1 exists or the SCI2 is carried on the PSSCH #1, the first device determines MCS information of the PSSCH #1 based on the third indication information. The first device demodulates and decodes the PSSCH #1 based on the information. The SCI2 may include indication information of the MCS of the PSSCH #2. The first device demodulates and decodes the PSSCH #2 based on the information. When the first device determines that the PSSCH #1 does not exist or the SCI2 is not carried on the PSSCH #1, the first device determines MCS information of the PSSCH #2 based on the third indication information, and the first device demodulates and decodes the PSSCH #2 based on the information.

In an implementation, in this embodiment, the first device may further determine whether the first data information exists on the PSSCH #1.

When the SCI1 and/or the SCI2 transmitted by the first device in the step 501 include/includes the first indication information, the first device determines, based on the first indication information, whether the first data information is carried on the PSSCH #1.

Optionally, the first device may determine, based on at least one of the size of the time-frequency resource of the PSCCH, the size of the frequency domain resource of the PSSCH #2, the size of the SCI1, and the size of the SCI2, whether the first data information is carried on the PSSCH #1. Specifically, when the first device determines that a quantity of resource elements (resource elements, REs) obtained after the SCI2 is removed from a resource on the PSSCH #1 is less than a threshold (the "threshold" may also be understood as a "threshold", and the threshold may be configured by a higher layer), the first device may determine that only the SCI2 is carried on the PSSCH #1, and data is not carried. It may also be understood as that the first device does not receive data on the PSSCH #1.

Step 504: The first device receives the PSSCH #2 based on the determined spatial domain receive parameter.

In this embodiment, the first device may determine, according to the step 503, the frequency domain position of the PSSCH #2 and the slot in which the PSSCH #2 is located. The first device may determine, based on the configuration 1 or the configuration 2 in the step 501, that the PSSCH #2 is located on the (x+y+2)^{th} symbol to the (z-1)^{th} symbol or the (x+y+3)^{th} symbol to the (z-1)^{th} symbol in the corresponding slot.

The first device may determine the spatial domain receive parameter of the PSSCH #2, that is, the receive beam, and the MCS of the PSSCH #2 according to step 503.

The first device receives a signal on a previous symbol of the PSSCH #2 based on the spatial domain receive parameter of the PSSCH #2, performs AGC adjustment based on the received signal, and then receives the PSSCH #2 based on adjusted AGC.

According to the method provided in this embodiment, the frame structure is changed by adding the PSSCH #1, to effectively use the remaining resource of the symbol on which the PSCCH is located. In addition, in a designed new frame structure, a device can determine, based on a previous slot SCI detection result, whether data is transmitted in a current slot (which may be understood as that the receiving end previously receives control information, and the control information indicates information related to data scheduling in the current slot). When determining that no data is transmitted in the current slot, the device may stop reception in a sidelink on a symbol other than the control channel, thereby achieving specific energy-saving gains.

When some small packets are transmitted and a channel environment (which may also be understood as a "channel state") is good, single-side beamforming can also provide good signal-to-noise ratio gains. In this case, beamforming may be performed only at a transmitting end (for example, a second device) through directional beam transmission. A receiving end (for example, a first device) receives a control channel and a data channel through a default beam (for example, an omnidirectional beam), to implement data scheduling in a same slot. In the foregoing scenario, FIG. 8 is a flowchart of a communication method 800 according to this application. The method in FIG. 8 includes the following steps.

Step 801: A second device transmits a PSCCH (an example of a control channel) and a PSSCH (an example of a data channel) to a first device in a same slot.

As described above, in this embodiment, data scheduling in the same slot may be implemented, that is, the second device may transmit the control channel and the data channel in the same slot. The data channel in this embodiment may include a first data channel (for example, a PSSCH #1) and a second data channel (for example, a PSSCH #2). In this embodiment, a time-frequency position of the PSSCH #2 may also be understood as a time-frequency position of a target data subchannel. In this embodiment, the PSSCH #1 and the PSSCH #2 are not distinguished, and are collectively referred to as the data channel.

In this embodiment, for example, fourth indication information may be carried on the PSCCH. The fourth indication information indicates that the PSSCH is scheduled by the PSCCH. In other words, the PSSCH in this embodiment may be scheduled by the PSCCH.

In this embodiment, the first device and the second device are allocated to a sidelink resource pool, and the resource pool may occupy an x^{th} symbol to a z^{th} symbol in each slot. x and z are integers greater than 0, and z is greater than x. The resource pool may be shared with the device in the communication method 500. The second device transmits the PSCCH on an (x+1)^{th} symbol to an (x+y)^{th} symbol in a slot. y (y is an integer greater than or equal to 1) is a quantity of symbols occupied by the PSCCH configured in the resource pool, and may be configured based on a higher-layer parameter. A start frequency domain position of the PSCCH is a start frequency domain position of a subchannel. Subchannel division may be configured based on a higher-layer parameter, and a quantity of PRBs occupied by the PSCCH may also be configured based on a higher-layer parameter. The PSCCH includes SCI1, and the SCI1 includes frequency domain allocation indication information of the PSSCH. The frequency domain allocation indication information includes at least a quantity of subchannels occupied by the PSCCH and a quantity of subchannels occupied by the PSSCH. On a symbol on which the PSCCH is not located, a start frequency domain position of the PSSCH is the same as a start frequency domain position of the PSCCH. On a symbol on which the PSCCH is located, the start frequency domain position of the PSSCH is the same as the start frequency domain position of the PSCCH. It should be noted that, when the PSSCH occupies only one subchannel, and the PSCCH also occupies one subchannel, the PSSCH does not exist on the symbol on which the PSCCH is located. This case may be understood as a special case in which the PSSCH occupies zero PRBs on the symbol on which the PSCCH is located. This case does not affect an essence of the technical solution of this application and is not further described in this application.

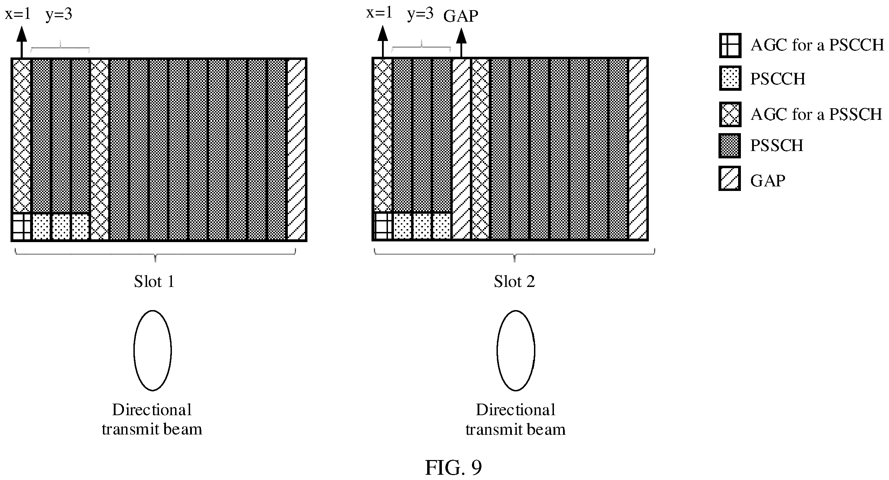

In an implementation, as shown in FIG. 9, the second device transmits the control channel and the data channel based on a same spatial domain transmit parameter, and through a directional beam.

If the configuration 1 is used in the method 500, in the slot, the PSSCH may occupy a position other than those of the PSCCH and the reference signal from the (x+1)^{th} symbol to the (x+y)^{th} symbol and an (x+y+2)^{th} symbol to a (z-1)^{th} symbol. In this case, the x^{th} symbol and an (x+y+1)^{th} symbol are AGC symbols. To be specific, the second device duplicates the PSSCH and the PSCCH on the (x+1)^{th} symbol to the x^{th} symbol, and duplicates the PSSCH on the (x+y+2)^{th} symbol to the (x+y+1)^{th} symbol. A reason for performing AGC again on the (x+y+2)^{th} symbol is that, in consideration of coexistence with the device in the method 500, on an entire carrier, a channel, a resource pool, or a BWP, the first device (that is, a receive device corresponding to the second device) may receive signals of other devices on the (x+1)^{th} symbol to the (x+y)^{th} symbol and the (x+y+2)^{th} symbol to the (z-1)^{th} symbol. Therefore, AGC needs to be performed again. (It may also be understood as that a third time-frequency position exists on the target data subchannel. Information at the third time-frequency position is a repetition of information about a 1^{st} time subunit of the target data subchannel. A time domain position of the third time-frequency position is a previous time subunit of the target data subchannel. A frequency domain position of the third time-frequency position is the same as a frequency domain resource occupied by the target data subchannel. It may also be understood as that the information at the third time-frequency position is the same as the information about the 1^{st} time subunit of the target data subchannel.)

If the configuration 2 is used in the method 500, in the slot, the PSSCH occupies a position other than those of the PSCCH and the reference signal from the (x+1)^{th} symbol to the (x+y)^{th} symbol and an (x+y+3)^{th} symbol to a (z-1)^{th} symbol. In this case, the x^{th} symbol and an (x+y+2)^{th} symbol are AGC symbols. To be specific, the second device duplicates the PSSCH and the PSCCH on the (x+1)^{th} symbol to the x^{th} symbol, and duplicates the PSSCH on the (x+y+3)^{th} symbol to the (x+y+2)^{th} symbol. In addition, the (x+y+1)^{th} symbol is a symbol used for a gap.

Optionally, the z^{th} symbol in the slot is a symbol used for a gap. When the resource pool is shared with the device in the method 500, an (x+y+1)^{th} symbol in each slot is used for a gap in the method 500. Therefore, the device in the method 500 does not transmit information on the symbol. If the device in this method performs transmission and reception on the symbol, an AGC problem occurs in the device in this method, and receiving performance is affected. Therefore, the symbol is also used for a gap in this method.

Optionally, when a resource of the PSFCH is configured in the slot, on the foregoing basis, it needs to be additionally ensured that the PSSCH does not occupy a symbol on which the PSFCH is located and two previous symbols of the PSFCH. One of the two symbols is used for a gap, and the other is used to receive AGC training of the PSFCH.

In this embodiment, when the second device transmits the PSCCH and the PSSCH to the first device in the same slot, the second device may indicate the first device in the following manner.

In an implementation, the PSCCH may include a TCI field (an example of a first field). In the method 500, the TCI field may indicate a spatial domain receive parameter of the PSSCH #2. In this method, because the spatial domain receive parameter of the data channel does not need to be indicated, when the second device transmits the PSCCH and the PSSCH in the same slot, a value of the TCI field may be a preset value. For example, when the second device transmits the PSCCH and the PSSCH in the same slot, the value of the TCI field is 1; or when the second device transmits the PSCCH and the PSSCH in the same slot, the value of the TCI field is 0.

In another implementation, the PSCCH may include an offset field. In the method 500, the resource may indicate a time domain position of the PSSCH #2. When the second device transmits the PSCCH and the PSSCH in the same slot, a value of the field may be set to a preset value.

According to the foregoing method, it can be ensured that when a control information format in this method is consistent with a control information format in the method 500, a special case of same-slot scheduling in this method is indicated, thereby reducing complexity for the receive device to detect control information.

Step 802: The first device receives the PSCCH and the PSSCH in the same slot.

In this embodiment, the first device receives the PSCCH and the PSSCH based on the same spatial domain receive parameter, or the first device receives both the PSCCH and the PSSCH through the omnidirectional receive beam.

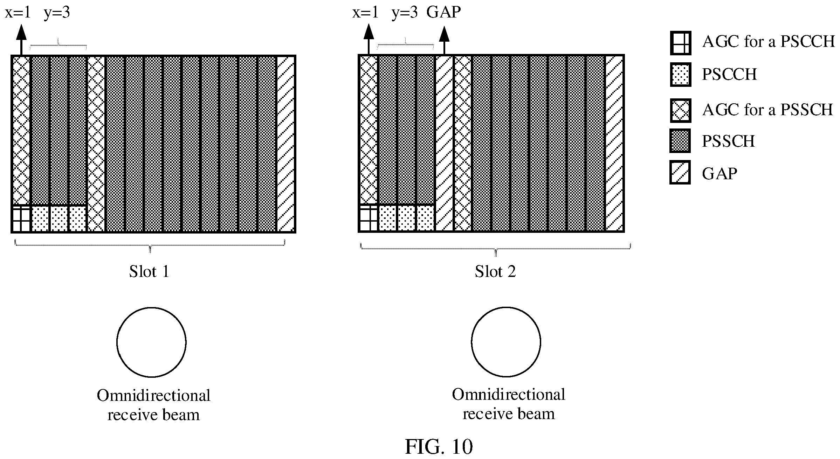

In an implementation, as shown in FIG. 10, the first device may receive a signal on the x^{th} symbol in the slot through a default beam or an omnidirectional beam, perform AGC adjustment based on the received signal, and then receive the (x+1)^{th} symbol to the (x+y)^{th} symbol based on adjusted AGC through a default beam or an omnidirectional beam. Specifically, the PSCCH and the corresponding SCI1 are detected on at least one subchannel on the (x+1)^{th} symbol to the (x+y)^{th} symbol in the slot. The SCI1 includes frequency domain allocation indication information of the PSSCH, and the frequency domain allocation indication information includes at least a quantity of subchannels occupied by the PSSCH, so as to determine a frequency domain position of the PSSCH.

In an implementation, the first device may determine, based on indication information included in the SCI1, that the PSCCH and the PSSCH are transmitted in the same slot. In an implementation, the PSCCH may include the TCI field. When the value of the TCI field is the preset value, the first device receives the PSCCH and the PSSCH in the same slot. In another implementation, the PSCCH may include the offset field. When the value of the field is the preset value, the first device receives the PSCCH and the PSSCH in the same slot, and performs transmission in the same slot.

Optionally, when the foregoing condition is not met, the first device may receive the data channel according to the method in the method 500, that is, cross-slot scheduling and reception.

Optionally, when the configuration 1 is used in the method 500, the first device receives a signal on the (x+y+1)^{th} symbol in the slot through a default beam or an omnidirectional beam, then performs AGC adjustment based on the received signal, and then receives the (x+y+2)^{th} symbol to the (z-1)^{th} symbol based on adjusted AGC through a default beam or an omnidirectional beam. When the configuration 2 is used in the method 500, the first device receives a signal on the (x+y+2)^{th} symbol in the slot through a default beam or an omnidirectional beam, then performs AGC adjustment based on the received signal, and then receives the (x+y+3)^{th} symbol to the (z-1)^{th} symbol based on adjusted AGC through a default beam or an omnidirectional beam.

Optionally, when the resource of the PSFCH is configured in the slot, the first device may not receive the symbol on which the PSFCH is located and two previous symbols of the PSFCH.

Based on the technical solution provided in this embodiment, for transmission of some small packets, when a channel condition is good, same-slot scheduling can be implemented, thereby reducing a data packet scheduling delay. In addition, if the system is deployed on an unlicensed millimeter-wave band, the terminal device needs to perform listen before talk before transmitting data. For example, the terminal device in the method 500 needs to perform listen before talk once before transmitting the PSCCH and the PSSCH #2. However, in this embodiment, listen before talk may be performed only once, thereby reducing listen before talk overheads.

For a plurality of periodic resources (for example, Y periodic resources, where Y is an integer greater than or equal to 1), a transmit-receive beam pair may be configured between a receive device and a transmit device, to perform semi-static scheduling. The receive device may determine a receive beam in advance, so that data scheduling using beamforming in a same slot can also be implemented. Therefore, this application further provides a communication method 1100. The method 1100 includes the following steps.

Step 1101: A second device periodically transmits a PSCCH, a PSSCH #1, and a PSSCH #2 to a first device.

In this embodiment, the PSCCH in a same slot may schedule the PSSCH #1 and the PSSCH #2 in the same slot.

In this embodiment, the first device and the second device are allocated to a sidelink resource pool, and the resource pool may occupy an x^{th} symbol to a z^{th} symbol in each slot.

In an implementation, the resource pool may be shared with the communication method 500 and the communication method 800.

In a 1^{st} period, for methods and time-frequency positions for the second device to transmit the PSCCH, the PSSCH #1, and the PSSCH #2, refer to the method 500.

In an implementation, the PSCCH or the PSSCH #1 may include period indication information for the second device to transmit data. The period may be a period based on the PSCCH, or may be a period based on the PSSCH #1. This is not limited in this technical solution of this application.

In an implementation, the period may be a period in a unit of slot.

Optionally, when a resource of the PSFCH is configured in a slot corresponding to a period, on the foregoing basis, it needs to be additionally ensured that the PSSCH #2 does not occupy a symbol on which the PSFCH is located and two previous symbols of the PSFCH. One of the two symbols is used for a gap, and the other is used to receive AGC training of the PSFCH.

In an implementation, the PSCCH and/or the PSSCH #1 may include a first trigger message, to indicate the second device to periodically transmit, after transmitting the trigger message, the PSCCH, the PSSCH #1, and the PSSCH #2 in the same slot starting from a period after a time period #B (an example of a first time threshold). A value of the time period #B may be higher-layer configured or preconfigured.

In an implementation, the PSCCH and/or the PSSCH #1 may include a first trigger message, to indicate the second device to periodically transmit the PSCCH, the PSSCH #1, and the PSSCH #2 in the same slot starting from a next period.

After the time period #B of the 1^{st} period or after a 2^{nd} period, the second device periodically transmits the PSCCH, the PSSCH #1, and the PSSCH #2 in the same slot, that is, the PSCCH, the PSSCH #1, and the PSSCH #2 are scheduled in the same slot. Positions of these slots need to match the period indication information in the PSCCH and/or the PSSCH #1. In these slots, for a method for the second device to transmit the PSCCH, the PSSCH #1, and the PSSCH #2 and time-frequency positions of the PSCCH, the PSSCH #1, and the PSSCH #2 in the slot, refer to the method 500. Details are not described herein again.

In an implementation, the PSCCH and/or the PSSCH #1 in a previous period (an example of an n^{th} period, n≥1) of each same-slot scheduling period may include indication information of a spatial domain receive parameter of the PSSCH #2 in a next period (an example of an (n+1)^{th} period, n≥1).

In an implementation, the PSCCH and/or the PSSCH #1 in a previous period (an example of an n^{th} period, n≥1) of each same-slot scheduling period may include indication information of spatial domain receive parameters of the PSCCH and the PSSCH #1 in a next period (an example of an (n+1)^{th} period, n≥1).

In an implementation, the two spatial domain receive parameters may be indicated by a same field.

In an implementation, in a period before same-slot scheduling starts, indication information of a spatial domain receive parameter in the PSCCH and/or the PSSCH #1 in the period may indicate both a spatial domain receive parameter of the PSSCH #2 in the period and indication information of a spatial domain receive parameter of the PSSCH #2 in a next period (that is, a 1^{st} period of same-slot scheduling), or the spatial domain receive parameter of the PSSCH #2 in the period and indication information of spatial domain receive parameters of the PSCCH, the PSSCH #1, and the PSSCH #2 in the next period.

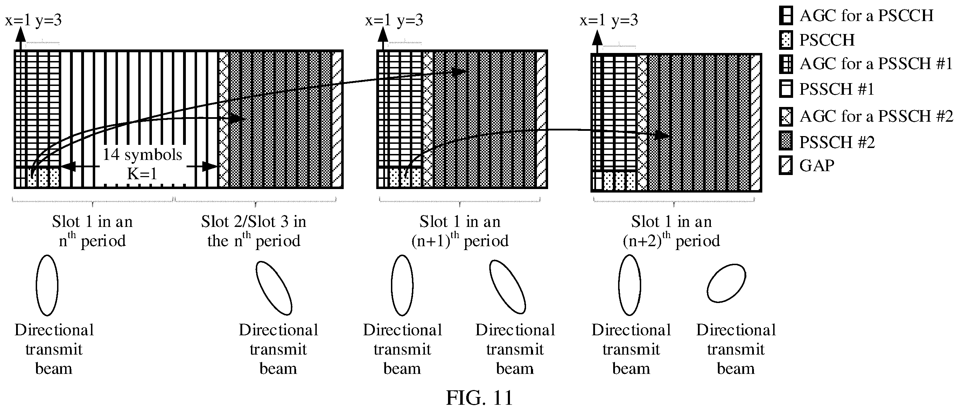

As shown in FIG. 11, for a periodic service, the second device may use the cross-slot scheduling method in the method 500 in the 1^{st} period. A TCI field in the control information (for example, the SCI1 or the SCI2) in the PSCCH and/or the PSSCH #1 may indicate a spatial domain receive parameter of a 1^{st} PSSCH #2 in the 1^{st} period and a spatial domain receive parameter of the PSSCH #2 in the 2^{nd} period. Starting from the 2^{nd} period, the second device may transmit the PSCCH, the PSSCH #1, and the PSSCH #2 in a same slot. Starting from the 2^{nd} period, the TCI field in the SCI1 indicates spatial domain receive parameters of the PSSCH #2 in a next period, and other fields in each piece of SCI1 except the TCI field may indicate information related to the data channel in the current period. In other words, the SCI1 and/or the SCI2 in the PSSCH #1 or the PSCCH in the 1^{st} period may indicate both a receive beam in the PSSCH #2 in the current period and a receive beam in the PSSCH #2 in a next period. Starting from the 2^{nd} period, the SCI1 and/or the SCI2 in the PSSCH #1 or the PSCCH indicate/indicates a receive beam in the PSSCH #2 in the next period.

Step 1102: The first device periodically receives the PSCCH, the PSSCH #1, and the PSSCH #2.

In the 1^{st} period, the first device receives the PSCCH, the PSSCH #1, and the PSSCH #2. For a receiving method and a time-frequency position, refer to the method 500.

In the 1^{st} period, the first device may periodically receive the PSCCH, the PSSCH #1, and the PSSCH #2 in a same period after determining based on period indication information in the PSCCH and/or the PSSCH #1 or the first trigger message.

The first device may determine, based on the period indication information of the PSCCH and/or the PSSCH #1 in the 1^{st} period and a time domain position of the PSCCH in the 1^{st} period or a time domain position of the PSSCH #2 in the next period, slot positions at which the PSCCH, the PSSCH #1, and the PSSCH #2 are located. For determining time-frequency positions of the PSCCH, the PSSCH #1, and the PSSCH #2 in one slot, refer to related steps in the method 500. Details are not described herein again.

After the time period #B of the 1^{st} period, or after the 2^{nd} period and later, the first device may receive the PSCCH, the PSSCH #1, and the PSSCH #2 in a same slot, that is, in a same-slot scheduling slot, the first device may receive the PSCCH, the PSSCH #1, and the PSSCH #2 in the same slot. The spatial domain receive parameter for receiving the PSSCH #2 is determined based on indication information of the spatial domain receive parameter in the previous period. Because the first device can determine the time domain position and the receive beam of the PSSCH #2 in advance, the first device does not need to dynamically determine the receive beam based on the indication information that is in the PSCCH and/or the PSSCH #1 and that is associated with the PSSCH #2. Therefore, the PSCCH, the PSSCH #1, and the PSSCH #2 are received in the same slot.

The spatial domain receive parameters for receiving the PSCCH and the PSSCH #1 may be default beams, may be omnidirectional beams, or may be beams determined based on indication information in the previous period.

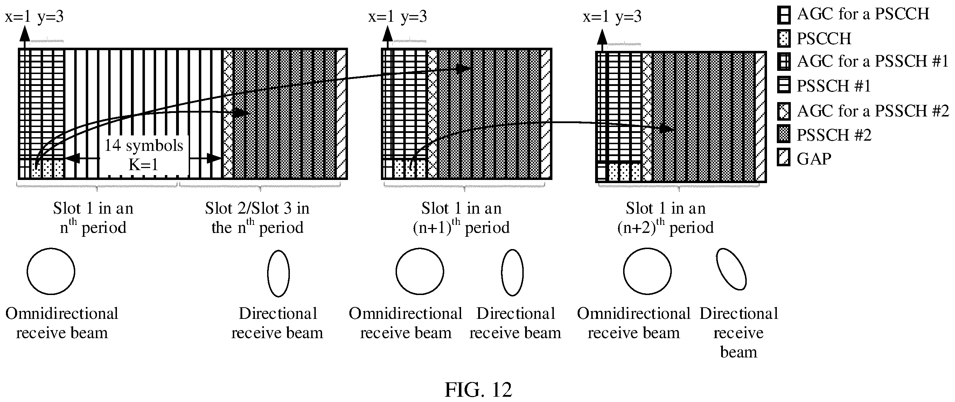

As shown in FIG. 12, in the 1^{st} period, the first device detects the PSCCH and the PSSCH #1 on an (x+1)^{th} symbol to an (x+y)^{th} symbol in the slot based on default beams or omnidirectional beams, and receives the PSSCH #2 based on frequency domain indication information and the indication information of the spatial domain receive parameter of the PSSCH #2 in the PSCCH and the PSSCH #1. In other words, in the 1^{st} period, the first device receives the PSCCH, the PSSCH #1, and the PSSCH#2 in different slots. In addition, because the PSCCH and/or the PSSCH #1 further include/includes the period indication information and/or the first trigger message of the data, the first device can determine that the PSCCH, the PSSCH #1, and the PSSCH #2 need to be received in the same slot in the 2^{nd} period, and can determine slot positions of the 2^{nd} period and subsequent periods based on the period indication information. Therefore, on the x^{th} symbol to the (x+y)^{th} symbol in a slot corresponding to the 2^{nd} period, the first device detects the PSCCH and the PSSCH #1 (including AGC training) based on the spatial domain receive parameter of the PSSCH #2 in the 1^{st} period, or detects the PSCCH and the PSSCH #1 still based on the default beams or the omnidirectional beams. In the 2^{nd} period, on an (x+y+1)^{th} symbol to a (z-1)^{th} symbol (corresponding to the configuration 1 in the method 500), or on an (x+y+2)^{th} symbol to the (z-1)^{th} symbol (corresponding to the configuration 2 in the method 500), the first device receives the PSSCH #2 (including AGC training) on a corresponding symbol in the 2^{nd} period based on a spatial domain receive parameter that is the same as the spatial domain receive parameter of the PSSCH #2 in the 1^{st} period. In a subsequent period (for example, a 3^{rd} period and later), a process of the 2^{nd} period is repeated.

Based on this technical solution, starting from the (n+1)^{th} period, the PSCCH, the PSSCH #1, and the PSSCH #2 may be transmitted in the same slot, thereby reducing a data transmission delay. In addition, in this embodiment, because all channels in one period are in a same slot, the transmitting end only needs to perform listen before talk only once, thereby reducing listen before talk overheads. In addition, because channels are periodic, the first device may determine the time-frequency position and the receive beam of the PSSCH #2 in advance, and beamforming-based reception of a data channel can ensure a signal-to-noise ratio and a supported transmission rate of the data channel.

In the technical solutions provided in the foregoing embodiments, it is assumed that a single piece of SCI schedules one PSSCH #1 and one PSSCH #2 or one PSSCH transmission scenario. Therefore, each time when data is transmitted, a receiving end usually receives the PSCCH and the PSSCH #1 through a default coarse beam or an omnidirectional beam, with a low SNR gain and a low corresponding MCS. Spectrum resource utilization is reduced. In addition, a high-frequency symbol interval is short, and there is a waste of control channel overheads in each slot. In consideration of the foregoing scenario, this embodiment provides a communication method 1300 with a frame structure in which a single piece of SCI schedules a plurality ofPSSCHs. The method includes the following steps.

Step 1301: A second device transmits a PSCCH, a PSSCH #1, and at least one PSSCH #2 to a first device.

In this embodiment, for example, there may be A PSSCHs #2, where A is an integer greater than or equal to 1.

In this embodiment, the PSCCH, the PSSCH #1, and the A PSSCHs #2 may be associated, or it may be understood as that data channels scheduled by the PSCCH is the PSSCH #1 and the APSSCHs #2.

In this embodiment, a value of A may be configured by a base station, may be predefined by a protocol, or may be indicated in SCI. This is not limited.

The PSCCH, the PSSCH #1, and the APSSCHs #2 may occupy a plurality of time units (for example, slots).

In this embodiment, the first device and the second device are allocated to a sidelink resource pool, and the resource pool may occupy an x^{th} symbol to a z^{th} symbol in each slot. x and z are integers greater than 0, and z is greater than x.

Optionally, the resource pool is not shared with the foregoing communication methods 500, 800, and 1100.

The second device transmits the PSCCH on an (x+1)^{th} symbol to an (x+y)^{th} symbol in a slot. y (y is an integer greater than or equal to 1) is a quantity of symbols occupied by the PSCCH configured in the resource pool, and may be configured based on a higher-layer parameter. A start frequency domain position of the PSCCH is a start frequency domain position of a subchannel. Subchannel division may be configured based on a higher-layer parameter, and a quantity of PRBs occupied by the PSCCH may also be configured based on a higher-layer parameter. The PSCCH includes SCI1, and the SCI1 includes frequency domain allocation indication information of the A PSSCHs #2. The frequency domain allocation indication information includes at least a quantity of subchannels occupied by the PSSCHs #2.

In an implementation, the SCI1 includes indication information of an MCS of the PSSCH #1.

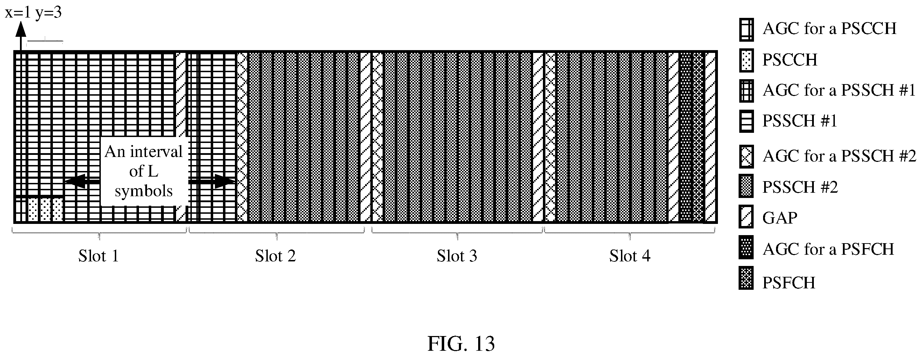

The second device transmits the PSSCH #1. The PSSCH #1 is divided into two parts. A first part and the PSCCH are located on a same symbol, that is, the (x+1)^{th} symbol and the (x+y)^{th} symbol in the slot. A start frequency domain PRB of the first part of the PSSCH #1 is a PRB above the PSCCH, and an end frequency domain PRB of the first part of the PSSCH #1 is the same as an end frequency domain PRB of the A PSSCHs #2. The second device duplicates a 1 ^{st} symbol of the PSCCH and the first part of the PSSCH #1 to a previous symbol, that is, an x^{th} symbol in the slot is an AGC symbol. From a perspective of a system, a 1^{st} symbol that can be used for sidelink communication in each slot is an AGC symbol, that is, the x^{th} symbol is the AGC symbol. As described above, the AGC symbol may be used by the receiving end to subsequently adjust an ADC parameter of the receiving end based on received power, and is used for subsequent signal reception. A second part of the PSSCH #1 and the PSCCH are located on different symbols. A start symbol of the second part of the PSSCH #1 is one symbol following the PSCCH, and an end symbol of the PSSCH #1 is an L^{th} symbol (L is an integer greater than or equal to 1) following the PSCCH, as shown in FIG. 13. In an implementation, a value of L is determined by a capability of the first device, to ensure that the first device can successfully decode control information in the PSCCH and/or the PSSCH #1 and adjust a beam before the PSSCH #1 ends.

When the PSSCH #2 occupies one subchannel, and the PSCCH also occupies one subchannel, the PSSCH #1 does not exist on the symbol on which the PSCCH is located. This case may be understood as a special case in which the PSSCH #1 occupies zero PRBs on the symbol on which the PSCCH is located. This case does not affect an essence of the technical solution of this application and is not further described in this application.

Optionally, the PSSCH #1 does not occupy a z^{th} symbol in each slot, and the symbol is a symbol used for a gap.

Optionally, if a resource of a PSFCH is configured in a slot, the PSSCH #1 does not occupy a symbol on which the PSFCH is located and two previous symbols of the PSFCH.

In an implementation, the SCI1 may also include indication information of L.

In an implementation, the second device determines a size of L based on a configuration negotiated with the first device.

In an implementation, a start frequency domain position of a second part of the PSSCH #1 is the same as that of the PSCCH, and an end frequency domain position of the second part of the PSSCH #1 is the same as an end frequency domain position of the APSSCHs #2.

In an implementation, the PSSCH #1 may include SCI2 and first data information.

In an implementation, the SCI2 may include indication information of an MCS of the APSSCHs #2.

In an implementation, the SCI1 and/or the SCI2 include/includes indication information of a spatial domain receive parameter of the A PSSCHs #2.

The second device transmits the PSCCH and the PSSCH #1 based on a same spatial domain transmit parameter, that is, through a transmit beam. In this way, power of the second device received in a same slot by another device (for example, a receive device that does not correspond to the second device) does not change, and a previous AGC configuration may be maintained to continue to receive data.

Step 1302: The second device transmits the APSSCHs #2.

In this application, a start symbol of a 1^{st} PSSCH #2 is a 2^{nd} logical symbol or a 3^{rd} logical symbol following an end symbol of the second part of the PSSCH #1. The logical symbols are symbols included in the resource pool. Specifically, when the end symbol of the PSSCH #1 is located on a (z-1)^{th} symbol in a slot, a z^{th} symbol in the slot is a symbol used for a gap. In this case, the start symbol of the 1^{st} PSSCH #2 is an (x+1)^{th} symbol in a next slot, that is, the start symbol of the first PSSCH #2 is the 3^{rd} logical symbol following the end symbol of the second part of the PSSCH #1. In another case, the start symbol of the 1^{st} PSSCH #2 is the 2^{nd} logical symbol following the end symbol of the second part of the PSSCH #1.

Optionally, the second device transmits the APSSCHs #2, the PSCCH, and the PSSCH #1 based on a same spatial domain transmit parameter.

Optionally, the A PSSCHs #2 are located in A consecutive slots.

Optionally, frequency domain resources occupied by the APSSCHs #2 are the same.

Optionally, a start symbol of a v^{th} (v is an integer greater than 1) PSSCH #2 in a slot in which the v^{th} PSSCH #2 is located is an (x+1)^{th} symbol.

Optionally, an end symbol of each PSSCH #2 in a slot in which the PSSCH #2 is located is a (z-1)^{th} symbol.

Optionally, if a resource of a PSFCH is configured in a slot, the PSSCHs #2 does not occupy a symbol on which the PSFCH is located and two previous symbols of the PSFCH.

Optionally, the second device duplicates a 1^{st} symbol of each PSSCH #2 to a previous symbol of the PSSCH #2 (which may also be understood as that there is a fourth time-frequency position before each second data channel, information at the fourth time-frequency position is a repetition of information about a 1^{st} time subunit of the second data channel, a time domain position of the fourth time-frequency position is a previous time subunit of the second data channel, and a frequency domain position of the fourth time-frequency position is the same as a frequency domain position of the second data channel, or which may also be understood as that the information at the fourth time-frequency position is the same as the information about the 1^{st} time subunit of the second data channel), to perform AGC training of the receiving device.

Optionally, each PSSCH #2 includes one piece of second data information.

Step 1303: The first device receives the PSCCH and the PSSCH #1 from the second device.

In this embodiment, the first device receives the PSCCH and the PSSCH #1 through a default beam or an omnidirectional beam. Alternatively, when the first device receives the PSCCH and the PSSCH #1 through the default beam, it may be understood as that the first device receives the PSCCH and the PSSCH #1 based on a same spatial domain receive parameter.

Optionally, the first device receives a signal on the x^{th} symbol in the slot through a default beam or an omnidirectional beam, performs AGC adjustment based on the received signal, and then receives the (x+1)^{th} symbol and subsequent (y+L-1) symbols based on adjusted AGC through a default beam or an omnidirectional beam. Specifically, the PSCCH and the corresponding SCI1 are detected on at least one subchannel on the (x+1)^{th} symbol to the (x+y)^{th} symbol in the slot. The SCI1 includes frequency domain allocation indication information of the PSSCH #2, and the frequency domain allocation indication information includes at least a quantity of subchannels occupied by the PSSCH #2, so as to determine a frequency domain position of the PSSCH #2.

When the SCI1 sent by the second device in the step 1301 includes the indication information of L, the first device determines a time domain position of the PSSCH #1 and a start time domain position of the PSSCH #2 based on the indication information.

Optionally, the first device determines a size of L based on a configuration previously negotiated by the second device and the first device, to determine the time domain position of the PSSCH #1 and the start time domain position of the PSSCH #2.

The PSSCH #1 is divided into two parts. A first part and the PSCCH are located on a same symbol, that is, the (x+1)^{th} symbol and the (x+y)^{th} symbol in the slot. A start frequency domain PRB of the first part of the PSSCH #1 is a PRB above the PSCCH, and an end frequency domain PRB of the first part of the PSSCH #1 is the same as an end frequency domain PRB of the APSSCHs #2. A second part of the PSSCH #1 and the PSCCH are located on different symbols. A start symbol of the second part of the PSSCH #2 is one symbol following the PSCCH, and an end symbol of the PSSCH #1 is an L^{th} symbol following the PSCCH.

A start frequency domain position of a second part of the PSSCH #1 is the same as that of the PSCCH, and an end frequency domain position of the second part of the PSSCH #1 is the same as an end frequency domain position of the A PSSCHs #2.

Optionally, the first device determines a spatial domain receive parameter of the A PSSCHs #2 based on indication information of the PSCCH and indication information of the PSSCH #1.

Optionally, the PSCCH includes the SCI1, and the first device determines the MCS of the PSSCH #1 based on the SCI1.

Optionally, the PSSCH #1 includes the SCI 2, and the first device determines the MCS of the APSSCHs #2 based on the SCI 2.

The first device may further determine time-frequency position information of the A PSSCHs #2. The start symbol of the 1^{st} PSSCH #2 is the 2^{nd} logical symbol or the 3^{rd} logical symbol following the end symbol of the second part of the PSSCH #1.

Optionally, the A PSSCHs #2 are located in the A consecutive slots.

Optionally, a start symbol of a v^{th} (v is an integer greater than 1) PSSCH #2 in a slot in which the v^{th} PSSCH #2 is located is an (x+1)^{th} time unit.

Optionally, the end symbol of each PSSCH #2 in the slot in which the PSSCH #2 is located is the (z-1)^{th} symbol.

Optionally, the frequency domain resources occupied by the APSSCHs #2 are the same. The start frequency domain position of the APSSCHs #2 is the same as the start frequency domain position of the PSCCH. Further, the first device determines the end frequency domain position of the APSSCHs #2 based on the quantity of subchannels occupied by the PSSCH #2 in the SCI1.

Optionally, if a resource of a PSFCH is configured in a slot, the PSSCHs #2 does not occupy a symbol on which the PSFCH is located and two previous symbols of the PSFCH.

Step 1304: The first device receives the A PSSCHs #2 based on the spatial domain receive parameter determined in the step 1303.

The first device determines, based on the indication information of the spatial domain receive parameter of the A PSSCHs #2 in the received PSCCH and/or the PSSCH #1, the spatial domain receive parameter for receiving the PSSCH #2.

In this embodiment, the first device may determine time-frequency positions of the A PSSCHs #2 according to the step 1303.

The first device may determine the spatial domain receive parameter of the PSSCHs #2, that is, the receive beam, and the MCS of the PSSCHs #2 according to the step 1303.

The first device receives a signal on a previous symbol of each PSSCH #2 based on the spatial domain receive parameter of the A PSSCHs #2, performs AGC adjustment based on the received signal, and then receives the PSSCH #2 based on adjusted AGC.

Based on this technical solution, in this embodiment, a single piece of SCI is allowed to schedule a plurality of PSSCHs, thereby reducing control signaling overheads. In addition, one system-level AGC overhead is reduced in each slot. In addition, an allowed time interval between the PSCCH and the PSSCH #2 may be more flexibly configured (that is, a start position of the 1^{st} PSSCH #2 is allowed to be more flexible) based on a capability of the receive device, and may not be slot-level scheduling.

In addition, in this embodiment, because the A second data channels may be continuous in time, a transmit device corresponding to the first device needs to perform listen before talk only once, thereby reducing listen before talk overheads. In addition, for each PSSCH #2, a start position symbol of the PSSCH #2 is an AGC symbol. An AGC symbol on an (x+2+y)^{th} symbol or an (x+1+y)^{th} symbol in another slot in the method 500 may be saved. In other words, one system-level AGC overhead may be reduced in each slot. Finally, compared with the configuration 2 in the method 500, in the method, overheads of using an (x+y+2)^{th} symbol in each slot as a gap can be saved.

It should be understood that "predefine" in this application may be understood as "define", "predefine", "store", "pre-store", "pre-negotiate", "pre-configure", "build into", or "pre-burn".

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

The wording "at the same time" in this application may be understood as being at a same time point, or may be understood as being in a time period, or may be understood as being in a same period, and may be specifically understood with reference to a context.

It should be understood that the embodiments described in this application may be independent solutions, or may be combined based on intrinsic logic. These solutions all fall within the protection scope of this application.

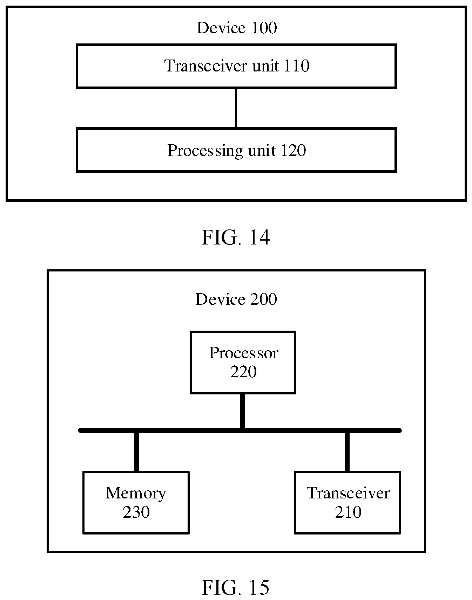

The communication methods provided in embodiments of this application are described above in detail with reference to FIG. 4 to FIG. 13. The following describes a communication device provided in embodiments of this application with reference to FIG. 14 and FIG. 15. It should be understood that descriptions of device embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between nodes. It may be understood that, to implement the foregoing function, each node, such as a terminal device or a network device, includes a corresponding hardware structure and/or software module for performing each function. A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 14 is a schematic block diagram of a communication device 100 according to an embodiment of this application. As shown in the figure, the device 100 may include a transceiver unit 110 and a processing unit 120.

In a possible design, the device 100 may be the first device in the foregoing method embodiments, or may be a chip configured to implement a function of the first device in the foregoing method embodiments. It should be understood that the device 100 may correspond to the terminal device in the method 400, the method 500, the method 800, the method 1100, and the method 1300 according to embodiments of this application, and the device 100 may perform the steps corresponding to the terminal device in the method 400, the method 500, the method 800, the method 1100, and the method 1300 according to embodiments of this application. It should be understood that a specific process in which the units perform the foregoing corresponding steps is described in detail in the foregoing method embodiments, and for brevity, details are not described herein.

Specifically, the transceiver unit is configured to receive a control channel and a first data channel. The transceiver unit receives the control channel and the first data channel based on a same spatial domain receive parameter, or the transceiver unit receives both the control channel and the first data channel through an omnidirectional receive beam. Indication information of a spatial domain receive parameter of a second data channel is carried on the control channel and/or the first data channel. The processing unit is configured to indicate, based on the indication information of the spatial domain receive parameter, the transceiver unit to receive the second data channel.

In some embodiments, the processing unit is configured to determine whether first data information is carried on the first data channel. When the processing unit determines that the first data information is carried on the first data channel, the processing unit is configured to indicate the transceiver unit to receive the first data information on the first data channel.

In some embodiments, before the transceiver unit receives the first data channel, the processing unit is configured to determine whether the first data channel exists.

In some embodiments, before the transceiver unit receives the first data channel, the processing unit is configured to determine whether second control information is carried on the first data channel.

Specifically, when the processing unit determines that the first data channel exists, the processing unit is configured to indicate that the transceiver unit is configured to receive the control channel and the data channel in a same time unit. The transceiver unit receives the control channel and the data channel based on the same spatial domain receive parameter, or the transceiver unit receives both the control channel and the data channel through the omnidirectional receive beam. Information about a 1^{st} time subunit of the data channel following the control channel is a repetition of information about a time subunit following the 1^{st} time subunit.

In some embodiments, a first field is carried on the control channel. The first field indicates the spatial domain receive parameter of the data channel. The processing unit determines that when a value of the first field is equal to a first preset value, the processing unit is configured to indicate the transceiver unit to receive the control channel and the data channel in the same time unit.

In some embodiments, indication information of a time resource of the data channel is carried on the control channel. The processing unit is configured to indicate the transceiver unit to receive the control channel and the data channel in the same time unit based on the indication information.

Specifically, the transceiver unit is configured to periodically receive a control channel, a first data channel, and a second data channel. In each period, the transceiver unit is configured to receive the control channel, the first data channel, and the second data channel in a same time unit. The transceiver unit receives the control channel and the first data channel based on a same spatial domain receive parameter. Alternatively, the transceiver unit receives both the control channel and the first data channel through an omnidirectional receive beam.

In some embodiments, before the transceiver unit is configured to periodically receive the control channel, the first data channel, and the second data channel in a same time unit, the transceiver unit is configured to receive a first trigger message. The first trigger message indicates that when a time after the transceiver unit receives the first trigger message is greater than or equal to a first time threshold, the transceiver unit starts to periodically receive the control channel, the first data channel, and the second data channel in the same time unit.

Specifically, the transceiver unit is configured to receive a control channel, a first data channel, and A second data channels, where A is a positive integer, the transceiver unit receives the control channel and the first data channel based on a same spatial domain receive parameter, or the transceiver unit receives both the control channel and the first data channel through an omnidirectional receive beam, and indication information of a spatial domain receive parameter of the A second data channels is carried on the control channel and/or the first data channel. The processing unit is configured to indicate, based on the indication information of the spatial domain receive parameter, the transceiver unit to receive the A second data channels. The control channel, the first data channel, and the second data channels occupy a plurality of time units. A start time subunit of a 1^{st} second data channel in the A second data channels is a 2^{nd} time subunit or a 3^{rd} time subunit following an end time domain time subunit of the first data channel. The control channel, the first data channel, and the A second data channels are associated.

In another possible design, the device 100 may be the second device in the foregoing method embodiments, or may be a chip configured to implement a function of the second device in the foregoing method embodiments. It should be understood that the device 100 may correspond to the second device in the method 400, the method 500, the method 800, the method 1100, and the method 1300 according to embodiments of this application, and the device 100 may perform the steps corresponding to the second device in the method 400, the method 500, the method 800, the method 1100, and the method 1300 according to embodiments of this application. It should be understood that a specific process in which the units perform the foregoing corresponding steps is described in detail in the foregoing method embodiments, and for brevity, details are not described herein.

FIG. 15 is a schematic block diagram of a communication device 200 according to an embodiment of this application. As shown in the figure, the device 200 includes at least one processor 220. The processor 220 is coupled to a memory, and is configured to execute instructions stored in the memory, to transmit a signal and/or receive a signal. Optionally, the device 200 further includes a memory 230, configured to store instructions. Optionally, the device 200 further includes a transceiver 210, and the processor 220 controls the transceiver 210 to transmit a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

It should be understood that a specific process in which the transceiver and the processor perform the foregoing corresponding steps is described in detail in the foregoing method embodiments. For brevity, details are not described herein.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product stores computer program code. When the computer program code is run on a computer, the computer is enabled to perform a method in any one of the embodiments of the method 400, the method 500, the method 800, the method 1100, and the method 1300.

According to the methods provided in embodiments of this application, this application further provides a computer-readable medium. The computer-readable medium stores program code. When the program code is run on a computer, the computer is enabled to perform a method in any one of the embodiments of the method 400, the method 500, the method 800, the method 1100, and the method 1300.

According to the method provided in embodiments of this application, this application further provides a system. The system includes the foregoing device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium. (for example, a high-density digital video disc (digital video disc, DVD)), or a semiconductor medium (for example, a solid state disk (solid state disc, SSD)), or the like.

The network side device and the terminal device in the foregoing device embodiments correspond to the network side device or the terminal device in the method embodiments. A corresponding module or unit performs a corresponding step. For example, a communication unit (a transceiver) performs a receiving step or a transmitting step in the method embodiments, and a step other than the transmitting step and the receiving step may be performed by a processing unit (a processor). For a specific function of the unit, refer to the corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first device, a control channel and a first data channel, wherein the first device receives the control channel and the first data channel based on a same spatial domain receive parameter, or the first device receives both the control channel and the first data channel through an omnidirectional receive beam, and indication information of a spatial domain receive parameter of a second data channel is carried on the control channel and/or the first data channel; and
receiving, by the first device, the second data channel based on the indication information of the spatial domain receive parameter.

2. The method according to claim 1, wherein
a position of a time domain resource occupied by the first data channel is the same as a position of a time domain resource of the control channel; and
a start position of a frequency domain resource occupied by the first data channel is a next frequency domain subunit of an end frequency domain subunit occupied by the control channel, and an end position of the frequency domain resource occupied by the first data channel is the same as an end position of a frequency domain resource occupied by the second data channel.

3. The method according to claim 1 or 2, wherein a 1^{st} symbol of the second data channel and a last symbol of the control channel are spaced by (K×M)+1 or (K×M)+2 time subunits in time domain, M is a quantity of time subunits comprised in one time unit, and K is an integer greater than or equal to 1.

4. The method according to any one of claims 1 to 3, wherein information at a first time-frequency position is a repetition of information about a 1 ^{st} time subunit of the control channel and the first data channel, a time domain position of the first time-frequency position is a previous time subunit of the control channel and the first data channel, and a frequency domain position of the first time-frequency position comprises a frequency domain resource occupied by the control channel and the frequency domain resource occupied by the first data channel.

5. The method according to any one of claims 1 to 4, wherein information at a second time-frequency position is a repetition of information about a 1 ^{st} time subunit of the second data channel, a time domain position of the second time-frequency position is a previous time subunit of the second data channel, and a frequency domain position of the second time-frequency position is the same as the frequency domain resource occupied by the second data channel.

6. The method according to any one of claims 1 to 5, wherein the first device is allocated to a first resource pool for communication, the first resource pool comprises an x^{th} time subunit to a z^{th} time subunit in each time unit, x and z are integers greater than 0, z is greater than x, the control channel and the first data channel occupy an (x+1)^{th} time subunit to an (x+y)^{th} time subunit in a time unit in which the control channel and the first data channel are located, y is a quantity of time subunits occupied by the control channel, and y is an integer greater than or equal to 1; and
a start time subunit of the second data channel is an (x+y+2)^{th} time subunit in a time unit in which the second data channel is located; or
a start time subunit of the second data channel is an (x+y+3)^{th} time subunit in a time unit in which the second data channel is located, and in each time unit, an (x+y+1)^{th} time subunit is a time subunit used for a gap.

7. The method according to any one of claims 1 to 6, wherein the method further comprises:
determining, by the first device, whether first data information is carried on the first data channel; and
when the first device determines that the first data information is carried on the first data channel, receiving, by the first device, the first data information on the first data channel.

8. The method according to any one of claims 1 to 7, wherein first indication information is carried on the control channel or the first data channel, and the first indication information indicates whether the first data information is carried on the first data channel; and
determining, by the first device based on the first indication information, whether to receive the first data information on the first data channel.

9. The method according to any one of claims 1 to 7, wherein second control information is carried on the first data channel; and
determining, by the first device, whether first data information is carried on the first data channel comprises:
determining, by the first device, based on at least one of a size of a time-frequency resource of the control channel, a size of the frequency domain resource of the second data channel, or a size of the second control information, whether to receive the first data information on the first data channel.

10. The method according to any one of claims 1 to 9, wherein before receiving, by a first device, a first data channel, the method further comprises:
determining, by the first device, whether the first data channel exists.

11. The method according to claim 10, wherein second indication information is further carried on the control channel, the second indication information indicates whether the first data channel exists, and the determining, by the first device, whether the first data channel exists comprises:
determining, by the first device based on the second indication information, whether the first data channel exists.

12. The method according to claim 10, wherein
determining, by the first device, whether the first data channel exists comprises:
determining, by the first device based on at least one of the size of the time-frequency resource of the control channel, the size of the frequency domain resource of the second data channel, and the size of the second control information, whether the first data channel exists or whether the second control information is carried on the first data channel.

13. The method according to any one of claims 10 to 12, wherein the method comprises:
when the first device determines that the first data channel does not exist, receiving, by the first device, the second control information on the second data channel.

14. The method according to any one of claims 10 to 13, wherein third indication information is carried on the control channel; and
when the first device determines that the first data channel exists, determinging, by the first device, an MCS of the first data channel based on the third indication information; or
when the first device determines that the first data channel does not exist, determining, by the first device, an MCS of the second data channel based on the third indication information.

15. The method according to any one of claims 1 to 14, wherein first control information is carried on the control channel, the second control information is carried on the first data channel, and that indication information of a spatial domain receive parameter of a second data channel is carried on the control channel and/or the first data channel comprises:
the first control information and/or the second control information comprise/comprises the indication information of the spatial domain receive parameter of the second data channel.

16. The method according to claim 15, wherein that the first control information and the second control information comprise the indication information of the spatial domain receive parameter of the second data channel comprises:
the first control information comprises a first field, the first field indicates identification information of a transmit device corresponding to the first device, the second control information comprises a second field, and the second field indicates the transmit device corresponding to the first device to transmit indication information of a spatial domain transmit parameter of the second data channel.

17. A communication method, comprising:
receiving, by a first device, a control channel, a first data channel, and A second data channels, wherein A is a positive integer, wherein
the first device receives the control channel and the first data channel based on a same spatial domain receive parameter, or the first device receives both the control channel and the first data channel through an omnidirectional receive beam;
indication information of a spatial domain receive parameter of the A second data channels is carried on the control channel and/or the first data channel; and
the first device receives the A second data channels based on the indication information of the spatial domain receive parameter, wherein
the control channel, the first data channel, and the second data channels occupy a plurality of time units;
a start time subunit of a 1^{st} second data channel in the A second data channels is a 2^{nd} time subunit or a 3^{rd} time subunit following an end time domain time subunit of the first data channel; and
the control channel, the first data channel, and the A second data channels are associated.

18. The method according to claim 17, wherein frequency domain resource allocation indication information and/or time domain allocation indication information of the A second data channels are/is carried on the control channel, and the method further comprises:
determining, by the first device, a position of a time-frequency resource of the first data channel based on a position of a time-frequency resource of the control channel and a position of a time-frequency resource of the A second data channels.

19. The method according to claim 17 or 18, wherein
a start time domain position of the first data channel is the same as a start time domain position of the control channel;
in a time subunit in which the control channel is located, a start position of a frequency domain resource occupied by the first data channel is a next frequency domain subunit of an end frequency domain subunit occupied by the control channel; and
in a time subunit in which the control channel is not located, a start frequency domain position of the first data channel is the same as a start frequency domain position of the control channel, and an end position of the frequency domain resource occupied by the first data channel is the same as an end position of a frequency domain resource occupied by the A second data channels.

20. The method according to any one of claims 17 to 19, wherein first control information is carried on the control channel, second control information and first data information are carried on the first data channel, and A pieces of second data information are carried on the A second data channels; and
the first control information comprises indication information of a modulation and coding scheme MCS of the first data channel and the indication information of the spatial domain receive parameter of the A second data channels, and the second control information comprises indication information of an MCS of the A second data channels.

21. The method according to any one of claims 17 to 20, wherein the 1^{st} second data channel in the A second data channels and the control channel are spaced by L time subunits in time domain, and L is an integer greater than or equal to 1.

22. The method according to any one of claims 17 to 21, wherein the first device is allocated to a second resource pool for communication, the second resource pool occupies an x^{th} time subunit to a z^{th} time subunit in each time unit, x and z are integers greater than 0, and z is greater than x;
in a time unit in which the 1^{st} second data channel is located, an end time domain time subunit of the 1^{st} second data channel does not exceed a (z-1)^{th} time subunit in the time unit; and
in a time unit in which a v^{th} second data channel in the A second data channels is located, v is an integer greater than 1, a start time subunit of the v^{th} second data channel is an (x+1)^{th} time subunit, and an end time subunit of the v^{th} second data channel does not exceed a (z-1)^{th} time subunit in the time unit.

23. The method according to any one of claims 17 to 22, wherein a fourth time-frequency position exists before each second data channel, information at the fourth time-frequency position is a repetition of information about a 1^{st} time subunit of the second data channel, a time domain position of the fourth time-frequency position is a previous time subunit of the second data channel, and a frequency domain position of the fourth time-frequency position is the same as a frequency domain position of the second data channel.

24. The method according to any one of claims 17 to 23, wherein the first device is allocated to the second resource pool for communication;
a same spatial domain transmit parameter is used when another device in the second resource pool transmits an associated control channel, an associated first data channel, and associated A second data channels; and
an end time domain time subunit of the first data channel of the another device in the second resource pool and a start time subunit of at least one second data channel associated with the first data channel of the another device are spaced by one time subunit or two time subunits.

25. A communication method, comprising:
transmitting, by a second device, a control channel and a first data channel, wherein the second device transmits the control channel and the first data channel based on a same spatial domain transmit parameter, wherein
indication information of a spatial domain receive parameter of a second data channel is carried on the control channel and/or the first data channel; and
transmitting, by the second device, the second data channel based on a spatial domain transmit parameter corresponding to the spatial domain receive parameter.

26. The method according to claim 25, wherein the second device transmits the control channel, the first data channel, and the second data channel based on the same spatial domain transmit parameter.

27. The method according to claim 25 or 26, wherein the second device duplicates a 1^{st} time subunit of the control channel and the first data channel to a previous time subunit of the first data channel.

28. The method according to any one of claims 25 to 27, wherein the second device duplicates a 1^{st} time subunit of the second data channel to a previous time subunit of the second data channel.

29. A communication method, comprising:
transmitting, by a second device, a control channel, a first data channel, and A second data channels, wherein A is a positive integer, wherein
the second device transmits the control channel, the first data channel, and the A second data channels based on a same spatial domain transmit parameter, wherein indication information of a spatial domain receive parameter of the A second data channels is carried on the control channel and/or the first data channel;
the control channel, the first data channel, and the second data channels occupy a plurality of time units;
a start time subunit of a 1^{st} second data channel in the A second data channels is a 2^{nd} time subunit or a 3^{rd} time subunit following an end time domain time subunit of the first data channel; and
the control channel, the first data channel, and the A second data channels are associated.

30. The method according to claim 29, wherein for each second data subchannel, the second device duplicates information about a 1^{st} time subunit of the second data subchannel to a previous time subunit of the second data subchannel.

31. The method according to claim 29 or 30, wherein the second device transmits the control channel, the first data channel, and the A second data channels based on the same spatial domain transmit parameter.

32. A communication device, comprising a processor, wherein the processor is configured to execute computer instructions stored in a memory, so that the device performs the method according to any one of claims 1 to 16, or the device performs the method according to any one of claims 17 to 24.

33. A communication device, comprising a processor, wherein the processor is configured to execute computer instructions stored in a memory, so that the device performs the method according to any one of claims 25 to 28, or the device performs the method according to any one of claims 29 to 31.
